(19) Europäisches Patentamt
European Patent Office
Office européen des brevets

(11) **EP 3 372 401 B1**

(12) **EUROPEAN PATENT SPECIFICATION**

(45) Date of publication and mention
of the grant of the patent:
**05.02.2020 Bulletin 2020/06**

(51) Int Cl.:
**B32B 27/08** $^{(2006.01)}$     **B32B 27/32** $^{(2006.01)}$

(21) Application number: **17382121.6**

(22) Date of filing: **10.03.2017**

(54) **MULTILAYER FILMS AND METHODS THEREOF**

MEHRSCHICHTIGE FOLIEN UND VERFAHREN DAFÜR

FILMS MULTICOUCHES ET PROCÉDÉS CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.09.2018 Bulletin 2018/37**

(73) Proprietor: **Dow Global Technologies Llc**
**Midland, MI 48674 (US)**

(72) Inventors:
• **DUMONT, Paul**
**8810 Horgen (CH)**
• **PARKINSON, Shaun**
**43007 Tarragona (ES)**
• **HU, Yushan**
**Freeport, TX Texas 77541 (US)**

(74) Representative: **Elzaburu S.L.P.**
**Miguel Angel 21, 2nd floor**
**28010 Madrid (ES)**

(56) References cited:
**WO-A1-2012/044730**     **WO-A1-2013/003541**
**US-A1- 2011 311 792**

## Description

### TECHNICAL FIELD

Embodiments of the present disclosure generally relate to multilayer films, and more particularly, to multilayer films having a high cling force and are substantially free of polyisobutylene (PIB).

### BACKGROUND

Multilayer films are often used in packaging, and may package diverse items, such as, bulk farm materials like grass and hay to small grocery store items like meats and vegetables. Examples of such films include pallet stretch wrap films and bale silage films. For all of these applications, it is usually desirable to have a resilient, stretchy film that has a sufficient level of tack or cling such that the film can releasably adhere to itself and/or an article that is wrapped with the film.

Incumbent solutions used in such applications utilize migratory cling additives, such as PIB, to impart cling properties. Since PIB is a migratory additive, control of the migration rate is critical to achieve the desired application cling performance. If this is not carefully controlled producers can suffer from telescoping reels or blocked reels having a very high unwind noise. The reels also have to be stored immediately after production at elevated temperatures (approx. 40°C) for a period of time so that the desired cling level is achieved. This can result in extra cost due to heated warehousing and time. US20110311792 discloses a multilayer film comprising a cling layer and a release layer. In the examples, the cling layer comprises an ethylene-based carrier resin Dowlex 2247 and 5 to 40 wt% of an INFUSE@ block copolymer including an ethylene-based soft block and an alpha-olefin-based copolymer hard block.

Accordingly, alternative multilayer films may be desired having improved properties, such as, high cling, using multilayer coextrusion blown film techniques.

### SUMMARY

Disclosed in embodiments herein are multilayer films. The multilayer films have a cling layer and a release layer. The cling layer comprises an ethylene-based carrier resin having a crystallinity ranging from 10% to 30%; and from 0.5 to 50.0 wt.% of a block composite or a specified block composite comprising (i) an ethylene-based copolymer, (ii) an alpha-olefin-based copolymer, and (iii) a block copolymer including an ethylene-based soft block that has a same composition as the ethylene-based copolymer of the block composite or specified block composite and an alpha-olefin-based hard block that has a same composition as the alpha-olefin-based copolymer of the block composite or specified block composite.

Also disclosed in embodiments herein are methods of making multilayer films. The methods comprise coextruding a cling layer composition with a release layer composition in an extruder to form a tube having a cling layer and a release layer, and cooling the tube to form a multilayer film. The cling layer composition comprises a carrier resin having a crystallinity ranging from 10% to 30%; and from 0.5 to 50.0 wt.% of a block composite or a specified block composite comprising (i) an ethylene-based copolymer, (ii) an alpha-olefin-based copolymer, and (iii) a block copolymer including an ethylene-based soft block that has a same composition as the ethylene-based copolymer of the block composite or specified block composite and an alpha-olefin-based hard block that has a same composition as the alpha-olefin-based copolymer of the block composite or specified block composite.

Additional features and advantages of the embodiments will be set forth in the detailed description which follows, and in part will be readily apparent to those skilled in the art from that description or recognized by practicing the embodiments described herein, including the detailed description which follows, the claims, as well as the appended drawing.

It is to be understood that both the foregoing and the following description describe various embodiments and are intended to provide an overview or framework for understanding the nature and character of the claimed subject matter.

### DETAILED DESCRIPTION

Reference will now be made in detail to embodiments of multilayer films and materials used to make such films. The multilayer films may be used in agricultural films, such as silage wrap, or surface protection films. It is noted, however, that this is merely an illustrative implementation of the embodiments disclosed herein. The embodiments are applicable to other technologies that are susceptible to similar problems as those discussed above. For example, the multilayer films described herein may be used in other stretch-cling or flexible packaging applications, such as, shrink films, heavy duty shipping sacks, liners, sacks, stand-up pouches, detergent pouches, sachets, etc., all of which are within the purview of the present embodiments.

In embodiments described herein, the multilayer films comprise a cling layer and a release layer. Optionally, one or more core layers may be positioned between the cling layer and the release layer. The cling layer is an outer layer of the multilayer film that has a sufficient level of adhesive tack such that the cling layer of the multilayer film may form a releasable bond when brought into contact with a surface, such as, the surface of an article or the surface of the release layer. The release layer is an outer layer of the multilayer film that exhibits low adhesion to the cling layer when wound up next to the cling layer in a roll. The release layer can then allow for separation to occur between the cling layer/release layer interface on a roll such that the multilayer film may be unrolled from a spool without undue force, high unwind noise, or without the film tearing.

The thickness of the cling and release layers can vary over a wide range. In some embodiments, the cling layer may have a thickness that is from 5-30 percent of the overall thickness of the film, from 5-25 percent of the overall thickness of the film, or even from 5-20 percent of the overall thickness of the film. The release layer may have a thickness that is from 5-30 percent of the overall thickness of the film, from 5-25 percent of the overall thickness of the film, or even from 5-20 percent of the overall thickness of the film. In some embodiments, where one or more core layers are present, the one or more core layers may have a thickness that is from 40-90 percent of the overall thickness of the film, 50-90 percent of the overall thickness of the film, 60-90 percent of the overall thickness of the film, or 70-90 percent of the overall thickness of the film. The ratio of the thicknesses among a cling layer, a release layer, and any optional core layers can be any ratio that provides desirable properties such as cling, release, and the like. In some embodiments, a multilayer film can have a cling layer thickness, a core layer thickness, and a release layer thickness in a ratio in the range of 1:8:1 to 3:4:3. The multilayer film has an overall thickness of from 10 microns to 50 microns.

Cling Layer

The cling layer comprises an ethylene-based carrier resin having a crystallinity ranging from 10% to 30%, from 10% to 25%, from 10% to 24%, or from 10% to 20%; and from 0.5 wt.% to 50 wt.%, from 1 wt.% to 35 wt.%, from 1 wt.% to 30 wt.%, or from 1 wt. % to 20 wt.% of a block composite or a specified block composite comprising (i) an ethylene-based copolymer, (ii) an alpha-olefin-based copolymer, and (iii) a block copolymer including an ethylene-based soft block that has a same composition as the ethylene-based copolymer of the block composite or specified block composite and an alpha-olefin-based hard block that has a same composition as the alpha-olefin-based copolymer of the block composite or specified block composite. The cling layer may comprise from 50 wt.% to 99.5 wt.%, from 65 wt.% to 99 wt.%, from 70 wt.% to 99 wt.%, or from 80 wt.% to 99 wt.% of the carrier resin.

*Carrier Resin*

In some embodiments, the carrier resin is an ethylene/alpha-olefin elastomer. In some embodiments, the carrier resin comprises one or more ethylene/alpha-olefin elastomers. The ethylene/alpha-olefin elastomer or the one or more ethylene/alpha-olefin elastomers, independently, has a crystallinity ranging from 10% to 30%, from 10% to 25%, from 10% to 24%, or from 10% to 20%. In addition to the crystallinity, the ethylene/alpha-olefin elastomer or the one or more ethylene/alpha-olefin elastomers, independently, may further be characterized density and melt index. For example the ethylene/alpha-olefin elastomer or the one or more ethylene/alpha-olefin elastomers, independently, may have a density ranging from 0.860 to 0.895 g/cc or 0.860 to 0.890 g/cc, and/or a melt index ranging from 0.25 to 10 g/10 mins or 0.5 to 6 g/10 mins.

In embodiments described herein, the ethylene/alpha-olefin elastomers may comprise greater than 50%, by weight, of the units derived from ethylene. All individual values and subranges of greater than 50%, by weight, are included and disclosed herein. For example, the ethylene/alpha-olefin elastomer may comprise at least 70%, at least 85%, at least 90%, at least 92%, at least 95%, at least 97%, at least 99, at least 99.5 %, from greater than 50% to 99.5%, from 70% to 99.5%, from 80% to 99.5%, from 85% to 99%, from 90% to 99%, from 92% to 99%, or from 95% to 99%, by weight, of the units derived from ethylene. The ethylene/alpha-olefin elastomer may also comprise less than 50%, by weight, of units derived from one or more alpha-olefin comonomers. All individual values and subranges of less than 50%, by weight, are included herein and disclosed herein. For example, the ethylene/alpha-olefin elastomer may comprise less than or equal to 50%, less than 45%, less than 40%, less than 30%, less than 20%, less than 15%, less than 12%, , from 10% to less than 50%, from 15% to 40%, from 20% to less than 50%, from 25% to 40%, by weight, of units derived from one or more alpha-olefin comonomers. The comonomer content may be measured using any suitable technique, such as techniques based on nuclear magnetic resonance ("NMR") spectroscopy, and, for example, by 13C NMR analysis as described in U.S. Patent 7,498,282, which is incorporated herein by reference.

Suitable alpha-olefin comonomers include those containing from 3 to 20 carbon atoms (C3-C20). For example, the alpha-olefin may be a C4-C20 alpha-olefin, a C4-C12 alpha-olefin, a C3-C10 alpha-olefin, a C3-C8 alpha-olefin, a C4-C8 alpha-olefin, or a C6-C8 alpha-olefin. In some embodiments, the alpha-olefin is selected from the group consisting of propylene, 1-butene, 1-pentene, 1-hexene, 4-methyl-1-pentene, 1-heptene, 1-octene, 1-nonene and 1-decene. In other embodiments, the alpha-olefin is selected from the group consisting of propylene, 1-butene, 1-hexene, and 1-octene. In further embodiments, the alpha-olefin is selected from the group consisting of 1-hexene and 1-octene.

Exemplary ethylene/alpha-olefin elastomers for use in a cling layer are commercially available under the trade names AFFINITY™ from the Dow Chemical Company, ENGAGE™ from the Dow Chemical Company, INFUSE™ from the Dow Chemical Company, EXACT™ from ExxonMobil Chemical, TAFMER™ from Mitsui Chemicals, Inc., and QUEO™ from Borealis Group. Suitable ethylene/alpha-olefin elastomers are further described in U.S. Pat. No. 5,272,236 (Lai et al.), U.S. Pat. No. 6,486,284 (Karande et al.), and U.S. Pat. No. 6,100,341 (Friedman), which are incorporated herein by reference.

Ethylene/alpha-olefin elastomers may be produced using single-site catalysts. Methods for producing olefin polymers using single site catalysts are described in U.S. Pat. No. 5,272,236 (Lai et al.) and U.S. Pat. No. 6,486,284 (Karande et al.), the entireties of which patents are incorporated herein by reference. Single-site catalyst systems may include metallocene catalysts and post-metallocene catalysts. In exemplary embodiments, the ethylene/alpha-olefin elastomer may be produced by a metallocene catalyst or a post-metallocene catalyst.

In some embodiments, the ethylene/alpha-olefin elastomer can include one or more olefin block copolymers. Olefin block copolymers are polymers comprising two or more chemically distinct regions or segments (referred to as "blocks") that may be joined in a linear manner, that is, a polymer comprising chemically differentiated units, which are joined end-to-end with respect to polymerized ethylenic functionality, rather than in pendent or grafted fashion. The blocks may differ in the amount or type of incorporated comonomer, density, amount of crystallinity, crystallite size attributable to a polymer of such composition, type or degree of tacticity (isotactic or syndiotactic), regio-regularity or regio-irregularity, amount of branching (including long chain branching or hyper-branching), homogeneity or any other chemical or physical property. Suitable olefin block copolymers are further described in U.S. Pat. No. 7,608,668, which is incorporated herein by reference.

In some embodiments, the carrier resin is an ethylene-vinyl actetate copolymer or one or more ethylene-vinyl acetate copolymers. Suitable ethylene-vinyl acetate copolymers (EVA) can made, for example, using a high pressure process similar to that used to make LDPE, i.e., a free radical polymerization reaction between ethylene and vinyl acetate. These polymerizations can be performed in conventional stirred autoclave or tubular reactors, and are usually conducted at high pressures (e.g., greater than about 20,000 psi) and at high temperatures (e.g., 200°-320°C.). The molecular weight of the EVA copolymers is typically controlled by addition of chain terminators, e.g., propylene or isobutylene. The type and level of branching of EVA copolymers is similar to that observed in LDPE. Typically, from about 5 to about 50 weight percent (based on the total weight of the final EVA copolymer) of vinyl actetate is copolymerized with ethylene. For use herein, the EVA copolymers have a vinyl acetate content from about 5 to about 40 percent, based on the total weight of the final EVA copolymer. Examples of suitable EVA copolymers may include ELVAX™ EVA copolymers available from E. I. du Pont de Nemours and Company (Wilmington, DE, USA), ALCUDIA™ EVA copolymers available from Repsol S.A. (Madrid, Spain), and ESCORENE™ EVA copolymers available from ExxonMobil Chemical Company (Houston, TX).

*Block Composite*

The term "block composite" (BC) refers to polymers comprising an ethylene based polymer (EP) having an ethylene content of from 10 mol% to 90 mol% (a soft copolymer), an alpha-olefin based polymer (AOP) having an alpha-olefin content of greater than 90 mol% (a hard copolymer), and a block copolymer having an ethylene block (EB) and an alpha-olefin block (AOB), wherein the ethylene block (soft block/segment) of the block copolymer is the same composition as the ethylene based polymer of the block composite and the alpha-olefin block (hard block/segment) of the block copolymer is the same composition as the alpha-olefin based polymer of the block composite. The compositional split between the amount of ethylene based polymer and alpha-olefin based polymer will be essentially the same as that between the corresponding blocks in the block copolymer. In certain embodiments, the alpha-olefin is propylene. In further embodiments, the AOB and EB may be an iPP-EP diblock copolymer.

"Hard" blocks/segments refer to highly crystalline blocks of polymerized units in which a monomer (e.g., propylene) is present in an amount greater than 90 mole percent. In other words, the comonomer content (e.g., ethylene content) in the hard blocks/segments is less than 10 mole percent. In some embodiments, the hard segments comprise all or substantially all propylene units (such as an iPP - isotactic polypropylene - copolymer or homopolymer block). "Soft" blocks/segments, on the other hand, refer to amorphous, substantially amorphous, or elastomeric blocks of polymerized units in which a monomer (e.g., ethylene) is present in an amount from 10 mole percent to 90 mole percent.

In exemplary embodiments, the block composite may have a total ethylene content that is from 25 wt% to 75 wt% (e.g., from 25 wt% to 60 wt%, from 25 wt% to 55 wt%, and from 30 wt% to 50 wt%) based on the total weight of the block composite. The remainder of the total weight of the block composite may be accounted for by units derived from at least one C3-10 alpha-olefin. For example, the remainder of the total weight of the block composite may be accounted for by units derived from propylene.

In exemplary embodiments, the block composite refers to polymers comprising a soft copolymer having an ethylene content that is from 10 mol% to 90 mol%, a hard copolymer having a propylene content that is greater than 90 mol%, and a block copolymer (e.g., a diblock) having a soft block (i.e., soft segment) and a hard block (i.e., hard segment), wherein the hard block of the block copolymer is the same composition as the hard copolymer of the block composite and the soft block of the block copolymer is the same composition as the soft copolymer of the block composite. The compositional split between the amount of soft copolymer and hard copolymer will be essentially the same as that between the corresponding blocks in the block copolymer.

In certain embodiments, the block composite refers to polymers comprising a soft copolymer having an ethylene content that is greater than 10 wt% and less than 86 wt%, a hard copolymer having a propylene content that is greater than 80 wt% and up to 100 wt%, and a block copolymer (e.g., a diblock) having a soft block (i.e., soft segment) and a hard block (i.e., hard segment), wherein the hard block of the block copolymer is the same composition as the hard copolymer of the block composite and the soft block of the block copolymer is the same composition as the soft copolymer of the block composite. The compositional split between the amount of soft copolymer and hard copolymer will be essentially the same as that between the corresponding blocks in the block copolymer.

In exemplary embodiments, the hard blocks refer to highly crystalline blocks of polymerized alpha-olefin units (e.g., propylene). In the hard blocks, the monomer (i.e., propylene) may be present in an amount greater than 80 wt% (e.g., greater than 85 wt%, greater than 90 wt%, and/or greater than 95 wt%). The remainder of the hard block may be the comonomer (e.g., ethylene) in an amount of less than 20 wt% (e.g., less than 15 wt% and/or less than 10 wt%). In exemplary embodiments, the hard blocks comprise all or substantially all propylene units, such as an iPP (isotactic) homopolymer block or an iPP copolymer block with less than 10 wt% of ethylene. In exemplary embodiments, the soft blocks refer to amorphous, substantially amorphous, or elastomer blocks of polymerized ethylene units. In the soft blocks, the monomer (i.e., ethylene) may be present in an amount of greater than 20 wt% and equal to or less than 100 wt% (e.g., from 40 wt% to 99 wt%, from 45 wt% to 90 wt%, and/or from 50 wt% to 80 wt%). The remainder of the soft block may be the comonomer (e.g., propylene).

According to an exemplary embodiment, the block composite includes a block copolymer having 30-70 wt% hard block and 30-70 wt% soft block. In other words, the block composite includes a block copolymer having 30-70 wt% hard block and 30-70 wt% soft block based on the weight of the block copolymer.

According to an exemplary embodiment, the block copolymer of the block composite has the formula (EP)-(iPP), in which EP represents the soft block of polymerized ethylene and propylene monomeric units (e.g., 50-80 wt% of ethylene and remainder propylene) and iPP represents a hard block of isotactic propylene homopolymer or isotactic propylene copolymer (e.g., less than 10 wt% of ethylene and remainder propylene).

The block composites may include from 0.5 wt% to 95.0 wt% EP, from 0.5 to 95.0 wt% iPP, and from 5.0 wt% to 99.0 wt% of the block copolymer. Weight percents are based on total weight of block composite. The sum of the weight percents of EP, iPP, and the block copolymer equals 100%. An exemplary measurement of the relative amount of the block copolymer is referred to as the Block Composite Index (BCI), as further discussed below. The BCI for the block composite is greater than 0 and less than 1.0.

In some embodiments, the block composites may have a microstructure index greater than 1 and equal to or less than 20. The microstructure index is an estimation using solvent gradient interaction chromatography (SGIC) separation to differentiate between block copolymers from random copolymers. In particular, microstructure index estimation relies on differentiating between two fractions, i.e., a higher random copolymer content fraction and a higher block copolymer content fraction, of which the random copolymer and the block copolymer have essentially the same chemical composition. The early eluting fraction (i.e., the first fraction) correlates to random copolymers and the late eluting component (i.e., the second fraction) correlates to block copolymers. The calculation of the microstructure index is discussed below.

The block composites may have a weight average molecular weight (Mw) from 10,000 g/mol to 2,500,00 g/mol, from 35,000 g/mol to 1,000,000 g/mol, from 50,000 g/mol to 300,000 g/mol, and/or from 50,000 g/mol to 200,000 g/mol. For example, the Mw may be from 20 kg/mol to 1,000 kg/mol, from 50 kg/mol to 500 kg/mol, and/or from 80 kg/mol to 200 kg/mol. The molecular weight distribution (Mw/Mn) or polydispersity of the block composites may be less than 5, between 1 and 5, and/or between 1.5 and 4. Weight average molecular weight (Mw) and number average molecular weight (Mn) are well known in polymer art and can be determined by methods known to a person of ordinary skill in the art.

The melt flow rate (MFR) of the block composites may be from 0.1 g/10 min to 1,000 g/10 min measured in accordance with ASTM D-1238 or ISO 1133 (230°C; 2.16 kg). For example, the melt flow rate of the block composites may be from 3 g/10 min to 60 g/10 min (e.g., from 3 g/10 min to 20 g/10 min, from 3 g/10 min to 15 g/10 min, and from 3 g/10 min to 10 g/10 min).

The density of the block composites may be between 0.850 and 0.920 g/cc. In exemplary embodiments, the density of the block composites is from 0.860 to 0.895, from 0.865 to 0.895, and/or from 0.865 to 0.890 g/cc. Density is measured in accordance with ASTM D792.

The block composites may have a second peak Tm of greater than 90°C (e.g., greater than 100°C). According to an exemplary embodiment, the block composites exhibit a second peak Tm in a range from 100°C to 150°C).

*Specified Block Composite*

The term "specified block composite" (SBC) refers to polymers comprising an ethylene based polymer (EP) having an ethylene content of from 78 mol% to 90 mol%, an alpha-olefin based polymer (AOP) having an alpha-olefin content of from 61 mol% to 90 mol%, and a block copolymer having an ethylene block (EB) and an alpha-olefin block (AOB), wherein the ethylene block of the block copolymer is the same composition as the ethylene based polymer of the specified block composite and the alpha-olefin block of the block copolymer is the same composition as the alpha-olefin based polymer of the specified block composite. The compositional split between the amount of ethylene based polymer and alpha-olefin based polymer will be essentially the same as that between the corresponding blocks in the block copolymer. In certain embodiments, the alpha-olefin is propylene. In certain embodiments, the AOB and EB may be an iPP-EP diblock copolymer. In further embodiments, the AOB and EB may be a PE/EP (propyleneethylene and ethylene-propylene) diblock copolymer.

The specified block composite (SBC) includes an ethylene based polymer (EP) (soft copolymer), an alpha-olefin based polymer (AOP) (hard copolymer), and a block copolymer having an ethylene block/segment (EB) (soft block) and an alpha-olefin block/segment (AOB) (hard block), where the ethylene block of the block copolymer is the same composition as the ethylene based polymer of the specified block composite and the alpha-olefin block of the block copolymer is the same composition as the alpha-olefin based polymer of the specified block composite. The compositional split between the amount of ethylene based polymer and alpha-olefin based polymer will be essentially the same as that between the corresponding blocks in the block copolymer. In the specified block composite, the alpha-olefin is at least one selected from the group of $C_{3\text{-}10}$ $\alpha$-olefins (e.g., may be propylene and/or butylene).

The alpha-olefin based polymer and the alpha-olefin block of the specified block composite may have an alpha-olefin content that is from 61 mol% to 90 mol%. The remainder may be essentially accounted for by at least one selected from the group of $C_2C_{4\text{-}10}$ $\alpha$ -olefins as comonomers. For example, the remainder may be essentially accounted for by units derived from ethylene, e.g., such that the ethylene content is from 10 mol% to 39 mol%. Said in another way, the alpha-olefin based polymer and the alpha-olefin block may have an alpha-olefin content (such as propylene content) that is from 70 wt% to 93 wt%.

The ethylene based polymer and ethylene block of the block copolymer of the specified block composite may have an ethylene content from 78 mol% to 90 mol%. The remainder may be essentially accounted for by at least one selected from the group of $C_{3\text{-}10}$ $\alpha$-olefins as a comonomer, e.g., such that the comonomer content is from 10 mol% to 22 mol%. Said in another way, the ethylene content of ethylene based polymer and ethylene block of the block copolymer may be from 75 wt% to 93 wt%.

In exemplary embodiments, the alpha-olefin based polymer and the alpha-olefin block of the block copolymer in the specified block composite includes propylene. For example, the propylene content is from 61 mol% to 90 mol%. The alpha-olefin based polymer and the alpha-olefin block of the block copolymer and may additional comprise ethylene as a comonomer. Further, the ethylene based polymer and the ethylene block of the block copolymer may comprise propylene as a comonomer. The compositional split between the amount of ethylene based polymer and the alpha-olefin based polymer will be essentially the same as that between the corresponding blocks in the block copolymer.

According to an exemplary embodiment, the specified block composite includes a block copolymer having 30-70 wt% hard block and 30-70 wt% soft block. In other words, the specified block composite includes a block copolymer having 30-70 wt% hard block and 30-70 wt% soft block based on the weight of the block copolymer.

The specified block composite may include from 0.5 wt% to 95.0 wt% EP, from 0.5 wt% to 95.0 wt% AOP, and from 5.0 wt% to 99.0 wt% of the block copolymer. For example, the specified block composite may include from 5.0 wt% to 80.0 wt% EP, from 5.0 wt% to 80.0 wt% AOP, and from 20.0 wt% to 90.0 wt% of the block copolymer. Weight percents are based on total weight of block composite. The sum of the weight percents of EP, AOP, and the block copolymer equals 100%. An exemplary measurement of the relative amount of the block copolymer is referred to as the Modified Block Composite Index (MBCI). The MBCI is based on HTLC separation (e.g., not xylene separation) to isolate unbounded polypropylene in the block composite, and the methodology and assumptions are similar to the CBCI calculation, as discussed below. The MBCI for the specified block composite is greater than 0 and less than 1.0.

The specified block composites may have a weight average molecular weight (Mw) from 10,000 g/mol to 2,500,00 g/mol, from 35,000 g/mol to 1,000,000 g/mol, from 50,000 g/mol to 300,000 g/mol, and/or from 50,000 g/mol to 200,000 g/mol. For example, the Mw may be from 20 kg/mol to 1,000 kg/mol, from 50 kg/mol to 500 kg/mol, and/or from 80 kg/mol to 200 kg/mol. The molecular weight distribution (Mw/Mn) or polydispersity of the specified block composites may be less than 5, between 1 and 5, and/or between 1.5 and 4. Weight average molecular weight (Mw) and number average molecular weight (Mn) are well known in polymer art and can be determined by methods known to a person of ordinary skill in the art.

The MFR (melt flow rate) of the specified block composites may be from 0.1 to 1000 g/10 min (230°C/2.16 kg), from 1 to 500 g/10 min (230°C/2.16 kg), from 3 to 30 g/10 min (230°C/2.16 kg), and/or from 5 to 11 g/10 min (230°C/2.16 kg).

In accordance with ASTM D792, the density of the specified block composite may be between 0.850 and 0.900 g/cc. In exemplary embodiments, the density of the specified block composite may be from 0.860 to 0.900, from 0.865 to 0.890, and/or from 0.870 to 0.890 g/cc.

The specified block composite may have a second peak Tm of greater than 60°C, greater than 70°C, and/or greater than 80°C.

*Crystalline Block Composite*

The term "crystalline block composite" (CBC) refers to polymers comprising a crystalline ethylene based polymer (CEP) having an ethylene content of greater than 90 mol%, a crystalline alpha-olefin based polymer (CAOP) having an alpha-olefin content of greater than 90 mol%, and a block copolymer having a crystalline ethylene block (CEB) and a crystalline alpha-olefin block (CAOB), wherein the CEB of the block copolymer is the same composition as the CEP of the crystalline block composite and the CAOB of the block copolymer is the same composition as the CAOP of the crystalline block composite. The compositional split between the amount of CEP and CAOP will be essentially the same as that between the corresponding blocks in the block copolymer. In exemplary embodiments, the alpha-olefin is propylene. In further embodiments, the CAOB and the CEB may be an iPP-EP (isotactic polypropylene and ethylene-propylene) diblock copolymer.

The crystalline block composites of the present disclosure are similar to those disclosed in WO 2016/0028961 A1, which is incorporated herein by reference.

*Polymerization of BC, SBC, and CBC*

The block composites, specified block composites, and crystalline block composites ("the composites") may be differentiated from conventional, random copolymers, physical blends of polymers, and block copolymers prepared via sequential monomer addition. The composites may be differentiated from random copolymers by characteristics such as higher melting temperatures for a comparable amount of comonomer, BCI, MBCI, CBCI, and microstructure index; from a physical blend by characteristics such as BCI, MBCI, CBCI, microstructure index, better tensile strength, improved fracture strength, finer morphology, improved optics, and/or greater impact strength at lower temperature; and from block copolymers prepared by sequential monomer addition by molecular weight distribution, rheology, shear thinning, rheology ratio, and in that there is block polydispersity. For example, the composites include a block copolymer having distinct regions or segments (referred to as "blocks") joined in a linear manner. The blocks differ, e.g., in the type of crystallinity such as polyethylene (PE) versus polypropylene (PP). The block copolymers can be linear or branched. When produced in a continuous process, the composites may possess PDI from 1.7 to 15 (e.g., from 1.8 to 10, from 1.8 to 5, and/or from 1.8 to 3.5). When produced in a batch or semi-batch process, the composites may possess PDI from 1.0 to 2.9 (e.g., from 1.3 to 2.5, from 1.4 to 2.0, and/or from 1.4 to 1.8).

The composites include the block copolymers possessing a most probable distribution of block lengths. The block copolymers may contain 2 or 3 blocks or segments. In a process for making the polymers of the composites, chain shuttling is used as a way to prolong the lifetime of a polymer chain such that a substantial fraction of the polymer chains exit at least the first reactor of a multiple reactor series or the first reactor zone in a multiple zoned reactor operating substantially under plug flow conditions in the form of polymer terminated with a chain shuttling agent, and the polymer chain experiences different polymerization conditions in the next reactor or polymerization zone. Different polymerization conditions in the respective reactors or zones include the use of different monomers, comonomers, or monomer/comonomer(s) ratio, different polymerization temperatures, pressures or partial pressures of various monomers, different catalysts, differing monomer gradients, or any other difference leading to formation of a distinguishable polymer segment. Thus, at least a portion of the polymer comprises two, three, or more, preferably two or three, differentiated polymer segments arranged intramolecularly.

The composites are prepared, e.g., by a process comprising contacting an addition polymerizable monomer or mixture of monomers under addition polymerization conditions with a composition comprising at least one addition polymerization catalyst, a cocatalyst, and a chain shuttling agent. The process is characterized by formation of at least some of the growing polymer chains under differentiated process conditions in two or more reactors operating under steady state polymerization conditions or in two or more zones of a reactor operating under plug flow polymerization conditions.

Suitable processes useful in producing the composites may be found in, e.g. example, U.S. Patent Nos. 8,053,529, 8,686,087, and 8,716,400. The polymerization may be carried out as a continuous polymerization, e.g., a continuous-solution polymerization, in which catalyst components, monomers, and optionally solvent, adjuvants, scavengers, and/or polymerization aids are continuously supplied to one or more reactors or zones and polymer product continuously removed therefrom. Within the scope of the terms "continuous" and "continuously" as used in this context are those processes in which there are intermittent additions of reactants and removal of products at small regular or irregular intervals, so that, over time, the overall process is substantially continuous. Further, a chain shuttling agent(s) may be added at any point during the polymerization including in a first reactor or zone, at the exit or slightly before the exit of the first reactor, between the first reactor or zone and a second or any subsequent reactor or zone, or even solely to the second or any subsequent reactor or zone. Exemplary chain shuttling agents, catalysts, and cocatalysts are those disclosed in, e.g., U.S. Patent No. 7,951,882 and WO 2011/016991 A2. For example, chain shuttling agents that are dialkyl zinc compounds may be used.

The catalyst may be prepared as a homogeneous composition by addition of the requisite metal complex or multiple complexes to a solvent in which the polymerization will be conducted or in a diluent compatible with the ultimate reaction mixture. The desired cocatalyst or activator and, optionally, the shuttling agent may be combined with the catalyst composition either prior to, simultaneously with, or after combination of the catalyst with the monomers to be polymerized and any additional reaction diluent.

Due to the difference in monomers, temperatures, pressures, or other differences in polymerization conditions between at least two of the reactors or zones connected in series, polymer segments of differing composition such as comonomer content, crystallinity, density, tacticity, regio-regularity, or other chemical or physical difference, within the same molecule are formed in the different reactors or zones. The size of each segment or block is determined by continuous polymer reaction conditions, and preferably is a most probable distribution of polymer sizes. Each reactor in the series can be operated under high pressure, solution, slurry, or gas phase polymerization conditions.

In the following exemplary processes, continuous or substantially continuous polymerization conditions may be employed. In a multiple zone polymerization, all zones operate under the same type of polymerization, such as solution, slurry, or gas phase, but at different process conditions. For a solution polymerization process, it is desirable to employ homogeneous dispersions of the catalyst components in a liquid diluent in which the polymer is soluble under the polymerization conditions employed. A high pressure process may be carried out at temperatures from 100°C to 400°C and at pressures above 500 bar (50 MPa). A slurry process may use an inert hydrocarbon diluent and temperatures of from 0°C up to a temperature just below the temperature at which the resulting polymer becomes substantially soluble in the inert polymerization medium. Exemplary temperatures in a slurry polymerization are from 30°C and pressures may range from atmospheric (100 kPa) to 500 psi (3.4 MPa).

Without limiting in any way the scope of the embodiments, one means for carrying out such a polymerization process is as follows. In one or more well stirred tank or loop reactors operating under solution polymerization conditions, the monomers to be polymerized are introduced continuously together with any solvent or diluent at one part of the reactor. The reactor contains a relatively homogeneous liquid phase composed substantially of monomers together with any solvent or diluent and dissolved polymer. Exemplary solvents include C4-10 hydrocarbons or mixtures thereof, especially alkanes such as hexane or mixtures of alkanes, as well as one or more of the monomers employed in the polymerization. Catalyst along with cocatalyst and optionally chain shuttling agent are continuously or intermittently introduced in the reactor liquid phase or any recycled portion thereof at a minimum of one location.

The reactor temperature and pressure may be controlled by adjusting the solvent/monomer ratio, the catalyst addition rate, as well as by use of cooling or heating coils, jackets or both. The polymerization rate is controlled by the rate of catalyst addition. The content of a given monomer in the polymer product is influenced by the ratio of monomers in the reactor, which is controlled by manipulating the respective feed rates of these components to the reactor. The polymer product molecular weight is controlled, optionally, by controlling other polymerization variables such as the temperature, monomer concentration, or by the previously mentioned chain shuttling agent, or a chain terminating agent such as hydrogen. Connected to the discharge of the reactor, optionally by means of a conduit or other transfer means, is a second reactor, such that the reaction mixture prepared in the first reactor is discharged to the second reactor without substantially termination of polymer growth. Between the first and second reactors, a differential in at least one process condition is established. For example, use in formation of a copolymer of two or more monomers, the difference is the presence or absence of one or more comonomers or a difference in comonomer concentration. Additional reactors, each arranged in a manner similar to the second reactor in the series may be provided as well. Upon exiting the last reactor of the series, the effluent is contacted with a catalyst kill agent such as water, steam or an alcohol or with a coupling agent. The resulting polymer product is recovered by flashing off volatile components of the reaction mixture such as residual monomers or diluent at reduced pressure, and, if necessary, conducting further devolatilization in equipment such as a devolatilizing extruder.

Alternatively, the foregoing polymerization may be carried out in a plug flow reactor with a monomer, catalyst, shuttling agent, temperature or other gradient established between differing zones or regions thereof, optionally accompanied by separated addition of catalysts and/or chain shuttling agent, and operating under adiabatic or non-adiabatic polymerization conditions.

*Optional Additives/Polymers*

Optionally, the cling layer can include one or more additives. Such additives include, but are not limited to, dyes, lubricants, fillers, pigments, primary antioxidants, secondary antioxidants, processing aids, UV stabilizers, release agents, slip agents, antiblocking agents, and combinations thereof. The cling layer may contain from about 0 percent to about 10 percent of a combined weight of such additives, based on the total weight of carrier resin and block composite or specified block composite resin present in the cling layer.

The carrier resin can be dry blended with the composites. Methods of dry blending resins can be found in U. S. Pat. No. 3,318,538 (Needham), the entirety of which patent is incorporated herein by reference. The carrier resin can also be melt-blended with the composites. Methods of melt blending resins can be found in U. S. Pat. No. 6,111,019 (Arjunan et al.), the entirety of which patent is incorporated herein by reference. The carrier resin and the composites can be used in an extrusion process to form a cling layer via, for e.g., blown film techniques.

Release Layer

The release layer comprises a low density polyethylene (LDPE) having a density of from 0.918 to 0.935 g/cc or 0.921 to 0.930 g/cc, a linear low density polyethylene (LLDPE) having a density of from 0.916 to 0.945 g/cc, 0.916 to 0.935 g/cc, 0.916 to 0.928 g/cc, or blends thereof. In some embodiments, the release layer comprises a low density polyethylene having a density of from 0.918 to 0.935 g/cc or 0.921 to 0.930 g/cc. In other embodiments, the release layer comprises a linear low density polyethylene having a density of from 0.916 to 0.945 g/cc or 0.916 to 0.935 g/cc, 0.916 to 0.928 g/cc. In further embodiments, the release layer comprises a blend of low density polyethylene (LDPE) having a density of from 0.918 to 0.935 g/cc or 0.921 to 0.930 g/cc and a linear low density polyethylene (LLDPE) having a density of from 0.916 to 0.945 g/cc, 0.916 to 0.935 g/cc, 0.916 to 0.928 g/cc. The blend may have from 5 to 95 wt.%, from 15 to 95 wt.%, from 25 to 95 wt.%, from 35 to 95 wt.%, from 45 to 95 wt.%, from 55 to 95 wt.%, from 60 to 95 wt.%, from 65 to 95 wt.%, from 5 to 70 wt.%, from 75 to 95 wt.%, or from 80 to 95 wt.%, of the low density polyethylene, and from 5 to 95 wt.%, from 5 to 85 wt.%, from 5 to 75 wt.%, from 5 to 65 wt.%, from 5 to 55 wt.%, from 5 to 45 wt.%, from 5 to 40 wt.%, from 5 to 35 wt.%, from 5 to 30 wt.%, from 5 to 25 wt.%, or from 5 to 20 wt.%, of a linear low density polyethylene having a density of from 0.916 to 0.945 g/cc, 0.916 to 0.935 g/cc, or 0.916 to 0.928 g/cc g/cc.

In addition to the density, the low density polyethylene may have a melt index, 12, of 0.2 g/10 min to 10 g/10 min, and the linear low density polyethylene may have a melt index, 12, of 0.1g/10 min to 5.0 g/10 min. All individual values and subranges are included and disclosed herein. For example, in some embodiments, low density polyethylene may have a melt index, 12, of 0.25 g/10 min to 5 g/10 min or 0.5 g/10 min to 3 g/10 min. In some embodiments, the linear low density polyethylene may have a melt index, 12, of 0.5 g/10 min to 4 g/10 min or 0.5 g/10 min to 2 g/10 min.

The LDPE may include branched polymers that are partly or entirely homopolymerized or copolymerized in autoclave and/or tubular reactors, or any combination thereof, using any type of reactor or reactor configuration known in the art, at pressures above 14,500 psi (100 MPa) with the use of free-radical initiators, such as peroxides (see for example U.S. Pat. No. 4,599,392, herein incorporated by reference). In some embodiments, the LDPE may be made in an autoclave process under single phase conditions designed to impart high levels of long chain branching, such as described in PCT patent publication WO 2005/023912, the disclosure of which is incorporated herein. Examples of suitable LDPEs may include, but are not limited to, ethylene homopolymers, and high pressure copolymers, including ethylene interpolymerized with, for example, vinyl acetate, ethyl acrylate, butyl acrylate, acrylic acid, methacrylic acid, carbon monoxide, or combinations thereof. The ethylene may also be interpolymerized with an alpha-olefin comonomer, for example, at least one C3-C20 alpha-olefin, such as propylene, isobutylene, 1-butene, 1-pentene, 1-hexene, and mixtures thereof. Exemplary LDPE resins may include, but is not limited to, resins sold by The Dow Chemical Company, such as, LDPE 150E, LDPE 310E, LDPE 410E or LDPE 545E, resins sold by SABIC, such as LDPE 210 N0W, LDPE 2102 TX00 or LDPE 2501 N0, resins sold by Borealis group, such as LDPE FT5230, LDPE FA6220, resins sold by ExxonMobil chemical company such as LDPE LD150BW, LDPE LD156BW. Other exemplary LDPE resins are described in WO 2014/051682 and WO 2011/019563, which are herein incorporated by reference.

The LLDPE may be a homogeneously branched or heterogeneously branched and/or unimodal or multimodal (e.g., bimodal) polyethylene. As used herein, "unimodal" refers to the MWD in a GPC curve does not substantially exhibit multiple component polymers (i.e., no humps, shoulders or tails exist or are substantially discernible in the GPC curve). In other words, the degree of separation is zero or substantially close to zero. As used herein, "multimodal" refers to the MWD in a GPC curve exhibits two or more component polymers, wherein one component polymer may even exist as a hump, shoulder or tail relative to the MWD of the other component polymer. The LLDPE comprises ethylene homopolymers, interpolymers of ethylene and at least one comonomer, and blends thereof. Examples of suitable comonomers may include alpha-olefins. Suitable alpha-olefins may include those containing from 3 to 20 carbon atoms (C3-C20). For example, the alpha-olefin may be a C4-C20 alpha-olefin, a C4-C12 alpha-olefin, a C3-C10 alpha-olefin, a C3-C8 alpha-olefin, or a C6-C8 alpha-olefin. In some embodiments, the linear low density polyethylene is an ethylene/alpha-olefin copolymer, wherein the alpha-olefin is selected from the group consisting of propylene, 1-butene, 1-hexene, and 1-octene. In other embodiments, the linear low density polyethylene is an ethylene/alpha-olefin copolymer, wherein the alpha-olefin is selected from the group consisting of 1-hexene and 1-octene.

Examples of suitable LLDPEs include substantially linear ethylene polymers, which are further defined in U.S. Pat. No. 5,272,236, U.S. Pat. No. 5,278,272, U.S. Pat. No. 5,582,923, U.S. Pat. No. 5,733,155, and EP2653392, and which are incorporated by reference; homogeneously branched linear ethylene polymer compositions, such as those described in U.S. Pat. No. 3,645,992, which is incorporated by reference; heterogeneously branched ethylene polymers, such as those prepared according to the process disclosed in U.S. Pat. No. 4,076,698; and/or blends thereof (such as those blends disclosed in U.S. Pat. No. 3,914,342 or U.S. Pat. No. 5,854,045), all of which is incorporated by reference. Commercially available examples of suitable LLDPEs include ELITE™, ELITE™ AT, or DOWLEX™ resins sold by The Dow Chemical Company, including, for example, ELITE™ 5100G or 5400G resins, ELITE™ AT 6401, , and DOWLEX™ 2020, 2045G, 2049G, or 2685 resins; EXCEED™ or ENABLE™ resins sold by Exxon Mobil Corporation, including, for example, EXCEED™ 1018 or 1023JA resins, and ENABLE™ 27-03, 27-05, or 35-05 resins; linear low density polyethylene resins sold by Borealis AG, including, for example, BORSTAR™ FB 2310 resin: LLDPE resins sold by SABIC, including for example LLDPE 6118NSF or LLDPE 726N.

The linear low density polyethylene can be made via gas-phase, solution-phase, or slurry polymerization processes, or any combination thereof, using any type of reactor or reactor configuration known in the art, e.g., fluidized bed gas phase reactors, loop reactors, stirred tank reactors, batch reactors in parallel, series, and/or any combinations thereof. In some embodiments, gas or slurry phase reactors are used. Suitable linear low density polyethylene may be produced according to the processes described at pages 15-17 and 20-22 in WO 2005/111291 A1, which is herein incorporated by reference. The catalysts used to make the linear low density polyethylene described herein may include Ziegler-Natta, chrome, metallocene, constrained geometry, or single site catalysts. In some embodiments, the LLDPE may be a znLLDPE, which refers to linear polyethylene made using Ziegler-Natta catalysts, a uLLDPE or "ultra linear low density polyethylene," which may include linear polyethylenes made using Ziegler-Natta catalysts, or a mLLDPE, which refers to LLDPE made using metallocene or constrained geometry catalyzed polyethylene. In some embodiments, unimodal LLDPE may be prepared using a single stage polymerization, e.g. slurry, solution, or gas phase polymerization. In some embodiments, the unimodal LLDPE may be prepared via solution polymerization. In other embodiments, the unimodal LLDPE may be prepared via slurry polymerization in a slurry tank. In another embodiment, the unimodal LLDPE may be prepared in a loop reactor, for example, in a single stage loop polymerization process. Loop reactor processes are further described in WO/2006/045501 or WO2008104371. Multimodal (e.g. bimodal) polymers can be made by mechanical blending of two or more separately prepared polymer components or prepared in-situ in a multistage polymerization process. Both mechanical blending and preparation in-situ. In some embodiments, a multimodal LLDPE may be prepared in-situ in a multistage, i.e. two or more stage, polymerization or by the use of one or more different polymerization catalysts, including single-, multi- or dual site catalysts, in a one stage polymerization. For example, the multimodal LLDPE is produced in at least two-stage polymerization using the same catalyst, for e.g. a single site or Ziegler-Natta catalyst, as disclosed in U.S. Patent 8,372,931, which is herein incorporated by reference. Thus, for example two solution reactors, two slurry reactors, two gas phase reactors, or any combinations thereof, in any order can be employed, such as disclosed in U.S. Pat. Nos. 4,352,915 (two slurry reactors), 5,925,448 (two fluidized bed reactors), and 6,445,642 (loop reactor followed by a gas phase reactor). However, in other embodiments, the multimodal polymer, e.g. LLDPE, may be made using a slurry polymerization in a loop reactor followed by a gas phase polymerization in a gas phase reactor, as disclosed in EP 2653392 A1, which is herein incorporated by reference.

Core Layer

Optionally, a multilayer film described herein can include one or more core layers positioned between the cling layer and the release layer. In some embodiments, the multilayer film comprises a core layer positioned between the cling layer and the release layer, and the core layer comprises a low density polyethylene having a density of from 0.918 to 0.935 g/cc, 0.918 to 0.930 g/cc, or 0.918 to 0.925 g/cc, or a linear low density polyethylene having a density of from 0.916 to 0.945 g/cc, 0.916 to 0.935 g/cc, or 0.916 to 0.928 g/cc or blends thereof. The core layer may comprise from 0 to 100 percent, 0 to 75 percent, 0 to 50 percent, 5 to 50 percent, 5 to 35 percent, 0 to 25 percent, 5 to 25 percent, or 5 to 20 percent of the LDPE, based on the total weight of polymer present in the core layer, and 0 to 100 percent, 25 to 100 percent, 50 to 100 percent, 50 to 95 percent, 65 to 95 percent, 75 to 100 percent, 75 to 95 percent, or 80 to 95 percent of the LLDPE, based on the total weight of polymer present in the core layer.

In other embodiments, the multilayer film comprises a core layer positioned between the cling layer and the release layer, and the core layer comprises 100 wt.% of linear low density polyethylene having a density of from 0.916 to 0.945 g/cc, 0.916 to 0.935 g/cc, or 0.916 to 0.928, or a blend of 80 wt.% to 100 wt.% (80 to 95 wt.%) of linear low density polyethylene having a density of from 0.916 to 0.945 g/cc, 0.916 to 0.935 g/cc, or 0.916 to 0.928, and from 0 wt.% to 20 wt.% (or 5 to 20 wt.%) of low density polyethylene having a density of from 0.918 to 0.935 g/cc, 0.918 to 0.930 g/cc, or 0.918 to 0.925 g/cc.

Multilayer Films

The multilayer films described herein can be made by a variety of techniques, such as, blown film techniques. Methods of making multilayer blown films are described in U.S. Patent No. 6,521,338 (Maka), the entirety of which patent is incorporated herein by reference. For example, in some embodiments, a multilayer blown film can be made by co-extruding a cling layer composition as previously described herein with a release layer composition as previously described herein (and, optionally, a core layer composition as previously described herein) in an extruder to form a tube having a cling layer and a release layer, and cooling the tube to form a multilayer film.

In some embodiments, a silage film comprises the multilayer films described herein. In other embodiments, a protective film comprises the multilayer films described herein.

Embodiments of the multilayer films will now be further described in the following illustrative examples.

## TEST METHODS

Density

Density is measured in accordance with ASTM D-792 and reported in grams per cubic centimeter ($g/cm^3$ or g/cc).

Melt Index

Melt index ($I_2$) is measured in accordance with ASTM D-1238, Procedure B (condition 190°C/2.16 kg) and reported in grams eluted per 10 minutes (g/10 min).

Percent Crystallinity (for non-Block Composites)

Differential Scanning Calorimetry (DSC) is used to measure the melting and crystallization behavior of a polymer over a wide range of temperatures. The following technique is used to measure percent crystallinity for polymers, other than composites. When the polymer is a composite, the technique described below in the *Percent Crystallinity (for Block Composites)* section is used. A TA Instruments Q1000 DSC, equipped with an RCS (refrigerated cooling system) and an autosampler are used to perform this analysis. During testing, a nitrogen purge gas flow of 50 ml/min is used. Each sample is melt pressed into a thin film at about 175°C; the melted sample is then air-cooled to room temperature (approx. 25°C). The film sample is formed by pressing a "0.1 to 0.2 gram" sample at 175°C at 1,500 psi, and 30 seconds, to form a "0.1 to 0.2 mil thick" film. A 3-10 mg, 6 mm diameter specimen is extracted from the cooled polymer, weighed, placed in a light aluminum pan (ca 50 mg), and crimped shut. Analysis is then performed to determine its thermal properties.

The thermal behavior of the sample is determined by ramping the sample temperature up and down to create a heat flow versus temperature profile. First, the sample is rapidly heated to 180°C, and held isothermal for five minutes, in order to remove its thermal history. Next, the sample is cooled to -40°C, at a 10 °C/minute cooling rate, and held isothermal at -40°C for five minutes. The sample is then heated to 150°C (this is the "second heat" ramp) at a 10°C/minute heating rate. The cooling and second heating curves are recorded. The cool curve is analyzed by setting baseline endpoints from the beginning of crystallization to -20°C. The heat curve is analyzed by setting baseline endpoints from -20°C to the end of melt. The values determined are peak melting temperature ($T_m$), peak crystallization temperature ($T_c$), heat of fusion ($H_f$) (in Joules per gram), and the calculated % crystallinity for the samples using: % Crystallinity = $((H_f)/(292 \text{ J/g})) \times 100$. The heat of fusion ($H_f$) and the peak melting temperature are reported from the second heat curve. Peak crystallization temperature can be determined from the cooling curve.

The percent crystallinity of a layer in a multilayer film is determined by multiplying the weight percent of each polymer component in that layer by the polymer component's percent crystallinity, and then adding the products:

$$\% \; Crystallinity \; of \; Layer = \sum_1^n \left( \frac{\begin{array}{c} Wt.Percent \; of \; Component \; n \\ in \; Layer \end{array}}{100} \right) (\% \; Crystallinity \; of \; Component \; n)$$

where n is the number of components in the layer. Thus, if a layer comprises 50% of an LLDPE and 50% of a block composite, the percent crystallinity will be calculated by adding one half of the crystallinity of the LLDPE (using the *Percent Crystallinity (for non-Block Composites)* method above) and one half of the crystallinity of the block copolymer (using the *Percent Crystallinity (for Block Composites)* method below).

### $C^{13}$ Nuclear Magnetic Resonance (NMR):

For Sample Preparation, samples are prepared by adding approximately 2.7g of a 50/50 mixture of tetrachloroethane-d2/orthodichlorobenzene that is 0.025M in chromium acetylacetonate (relaxation agent) to 0.21g sample in a 10mm NMR tube. The samples are dissolved and homogenized by heating the tube and its contents to 150°C.

For Data Acquisition Parameters, data is collected using a Bruker 400 MHz spectrometer equipped with a Bruker Dual DUL high-temperature CryoProbe. The data is acquired using 320 transients per data file, a 7.3 sec pulse repetition delay (6 sec delay + 1.3 sec acq. time), 90 degree flip angles, and inverse gated decoupling with a sample temperature of 125°C. All measurements are made on non-spinning samples in locked mode. Samples are homogenized immediately prior to insertion into the heated (130°C) NMR Sample changer, and are allowed to thermally equilibrate in the probe for 15 minutes prior to data acquisition. The NMR may be used to determine total weight percent of ethylene, e.g., with respect to the modified block composite index discussed below.

### Percent Crystallinity (for Block Composites)

Differential Scanning Calorimetry (DSC) is used to measure crystallinity in composites as follows. About 5 to 8 mg of polymer sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE (230°C for polypropylene or "PP"). The sample is kept at this temperature for three minutes. Then the sample is cooled at a rate of 10°C/min to -60°C for PE (-40°C for PP), and kept isothermally at that temperature for three minutes. The sample is next heated at a rate of 10°C/min, until complete melting (second heat). The percent crystallinity is calculated by dividing the heat of fusion ($H_f$), determined from the second heat curve, by a theoretical heat of fusion of 292 J/g for PE (165 J/g, for PP), and multiplying this quantity by 100 (for example, % cryst. = ($H_f$ / 292 J/g) x 100 (for PE)).

Unless otherwise stated, melting point(s) ($T_m$) of each polymer is determined from the second heat curve (peak Tm), and the crystallization temperature ($T_c$) is determined from the first cooling curve (peak Tc).

Molecular weight distribution (MWD) is measured using Gel Permeation Chromatography (GPC). In particular, conventional GPC measurements are used to determine the weight-average (Mw) and number-average (Mn) molecular weight of the polymer, and to determine the MWD (which is calculated as Mw/Mn). Samples are analyzed with a high-temperature GPC instrument (Polymer Laboratories, Inc. model PL220). The method employs the well-known universal calibration method, based on the concept of hydrodynamic volume, and the calibration is performed using narrow polystyrene (PS) standards, along with four Mixed A $20\mu m$ columns (PLgel Mixed A from Agilent (formerly Polymer Laboratory Inc.)) operating at a system temperature of 140°C. Samples are prepared at a "2 mg/mL" concentration in 1,2,4-trichlorobenzene solvent. The flow rate is 1.0 mL/min, and the injection size is 100 microliters.

As discussed, the molecular weight determination is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Ward in Journal of Polymer Science, Polymer Letters, Vol. 6, (621) 1968) to derive the following equation:

$$\text{Mpolyethylene} = a * (\text{Mpolystyrene})^b.$$

In this equation, a = 0.4316 and b = 1.0 (as described in Williams and Ward, J. Polym. Sc., Polym. Let., 6, 621 (1968)). Polyethylene equivalent molecular weight calculations were performed using VISCOTEK TriSEC software Version 3.0.

### High Temperature Liquid Chromatography

High Temperature Liquid Chromatography Experimental Method Instrumentation is the HTLC experiment, which is done according to the published method with minor modifications (Lee, D.; Miller, M. D.; Meunier, D. M.; Lyons, J. W.; Bonner, J. M.; Pell, R. J.; Shan, C. L. P.; Huang, T. J. Chromatogr. A 2011, 1218, 7173). Two Shimadzu (Columbia, MD, USA) LC-20AD pumps are used to deliver decane and trichlorobenzene (TCB) respectively. Each pump is connected to a 10:1 fixed flow splitter (Part #: 620-PO20-HS, Analytical Scientific Instruments Inc., CA, USA). The splitter has a pressure drop of 1500 psi at 0.1 mL/min in $H_2O$ according to the manufacturer. The flow rates of both pumps are set at 0.115 mL/min. After the splitting, the minor flow is 0.01 mL/min for both decane and TCB, determined by weighing the collected solvents for more than 30 min. The volume of the collected eluent is determined by the mass and the densities of the solvents at room temperature. The minor flow is delivered to the HTLC column for separation. The main flow is sent back to the solvent reservoir. A 50-$\mu$L mixer (Shimadzu) is connected after the splitters to mix the solvents from Shimadzu pumps. The mixed solvents are then delivered to the injector in the oven of Waters (Milford, MA, USA) GPCV2000. A Hypercarb™ column (2.1 $\times$ 100 mm, 5 $\mu$m particle size) is connected between the injector and a 10-port VICI valve (Houston, TX, USA). The valve is equipped with two 60-$\mu$L sample loops. The valve is used to continuously sample eluent from the first dimension (D1) HTLC column to the second dimension (D2) SEC column. The pump of Waters GPCV2000 and a PLgel Rapid™-M column (10 $\times$ 100 mm, 5 $\mu$m particle size) are connected to the VICI valve for D2 size exclusion chromatography (SEC). The symmetric configuration is used for the connections as described in the literature (Brun, Y.; Foster, P. J. Sep. Sci. 2010, 33, 3501). A dual-angle light scattering detector (PD2040, Agilent, Santa Clara, CA, USA) and an IR5 inferred absorbance detector are connected after the SEC column for measurement of concentration, composition, and molecular weight.

*Separation for HTLC:* Approximately 30 mg are dissolved in 8-mL decane by gently shaking the vial at 160 °C for 2 hours. The decane contains 400 ppm BHT (2,6-Di-tert-butyl-4-methylphenol) as the radical scavenger. The sample vial is then transferred to the autosampler of GPCV2000 for injection. The temperatures of the autosampler, the injector, both the Hypercarb and the PLgel columns, the 10-port VICI valve, and both the LS and IR5 detectors are maintained at 140 °C throughout the separation.

The initial conditions before injection are as follows. The flow rate for the HTLC column is 0.01 mL/min. The solvent composition in the D1 Hypercarb column is 100% decane. The flow rate for the SEC column is 2.51 mL/min at room temperature. The solvent composition in the D2 PLgel column is 100% TCB. The solvent composition in the D2 SEC column does not change throughout the separation.

A 311-$\mu$L aliquot of sample solution is injected into the HTLC column. The injection triggers the gradient described below:

From 0 - 10 min, 100% decane/ 0% TCB;

From 10 - 651 min, TCB is increased linearly from 0% TCB to 80% TCB.

The injection also triggers the collection of the light scattering signal at 15° angle (LS15) and the "measure" and "methyl" signals from IR5 detector (IR$_{measure}$ and IR$_{methyl}$) using EZChrom™ chromatography data system (Agilent). The analog signals from detectors are converted to digital signals through a SS420X analog-to-digital converter. The collection frequency is 10 Hz. The injection also triggers the switch of the 10-port VICI valve. The switch of the valve is controlled by the relay signals from the SS420X converter. The valve is switched every 3 min. The chromatograms are collected from 0 to 651 min. Each chromatogram consist of 651/3 = 217 SEC chromatograms.

After the gradient separation, 0.2 mL of TCB and 0.3 mL of decane are used to clean and re-equilibrate the HTLC column for next separation. The flow rate of this step is 0.2 mL/min, delivered by a Shimadzu LC-20 AB pump connected to the mixer.

*Data Analysis for HTLC:* The 651 min raw chromatogram is first unfolded to give 217 SEC chromatograms. Each chromatogram is from 0 to 7.53 mL in the unit of 2D elution volume. The integration limit is then set and the SEC chromatograms undergo spike removal, baseline correction, and smoothing. The process is similar to batch analysis of multiple SEC chromatograms in conventional SEC. The sum of all the SEC chromatograms is inspected to ensure both left side (upper integration limit) and right side (lower integration limit) of the peak were at the baseline as zero. Otherwise, the integration limit is adjusted to repeat the process.

Each SEC chromatogram *n* from 1 to 217 yields an X-Y pair in the HTLC chromatogram, where *n* is the fraction number:

$$X_n = \text{elution volume (mL)} = \text{D1 flow rate} \times n \times t_{switch}$$

where $t_{switch}$ = 3min is the switch time of the 10-port VICI valve.

$$Y_n = \text{signal intensity (Voltage)} = \sum_{peak\ start}^{peak\ end} IR_{measure,n}$$

The above equation uses *IR*$_{measure}$ signal as the example. The obtained HTLC chromatogram shows the concentrations of the separated polymeric components as a function of elution volume. The normalized *IR*$_{measure}$ HTLC chromatogram includes Y represented by dW/dV, meaning the normalized weight fractions with respect to the elution volume.

X-Y pairs of data are also obtained from $IR_{methyl}$ and LS15 signals. The ratio of $IR_{methyl}/IR_{measure}$ is used to calculate composition after calibration. The ratio of LS15/$IR_{measure}$ is used to calculate weight-average molecular weight ($M_w$) after calibration.

Calibration follows the procedures of Lee et al., *ibid.* High density polyethylene (HDPE), *isotactic* polypropylene (*i*PP), and ethylene-propylene copolymer with propylene contents of 20.0, 28.0, 50.0, 86.6, 92.0, and 95.8 wt% P are used as the standards for $IR_{methyl}/IR_{measure}$ calibration. The composition of the standards are determined by NMR. The standards are run by SEC with IR5 detector. The obtained $IR_{methyl}/IR_{measure}$ ratios of the standards are plotted as a function of their compositions, yielding the calibration curve.

The HDPE reference is used for routine LS15 calibration. The $M_w$ of the reference is predetermined by GPC as 104.2 kg/mol with LS and RI (refractive index) detectors. GPC uses NBS 1475 as the standard in GPC. The standard has a certified value of 52.0 kg/mol by NIST. Between 7 to 10 mg of the standard is dissolved in 8-mL decane at 160 °C. The solution is injected to the HTLC column in 100% TCB. The polymer is eluted under constant 100% TCB at 0.01 mL/min. Therefore, the peak of the polymer appears at the HTLC column void volume. A calibration constant, $\Omega$, is determined from the total LS15 signals ($A_{LS15}$) and the total $IR_{measure}$ signals ($A_{IR,measure}$):

$$\Omega = \frac{A_{LS15}}{A_{IR,measure}M_w}$$

The experimental LS15/$IR_{measure}$ ratio is then converted to $M_w$ through $\Omega$.

Cling

Cling is measured according to ASTM D5458-95 and reported in grams (g).

Stretched Cling

Stretched cling is measured on a Highlight Stretch Film Test Stand from Highlight Industries Inc. For the stretch cling test the take-up mandrel is replaced by a round aluminum drum with a diameter of 22 cm. The test consists of stretching a 500 mm wide, 25 micron thick single-sided cling film at the desired elongation (pre-set stretch). The elongation levels at which the cling values are generated are 80%, 100%, 150%, and 250%. The stretching takes place between a brake roller and a traction roller that are separated so that the stretching of the film takes place over a 17.0 cm distance. During the stretch cling test the traction roller operates at 55 m/min. Stretch film is obtained by running the traction roller at a higher rpm than the brake roller. At the desired stretch level at least 10 m of film is collected on the aluminum drum. The collected film must be free of defects.

The aluminum drum is subsequently fixed, to prevent it from turning. The stretched film is cut and two wraps of film are unrolled and attached to a force gauge containing a load cell. The force gauge is located in the tangent of the aluminum drum. The initial distance between the drum and force gauge is 29 cm. The film is unwound by pulling the force gauge backwards with 1 m/minute for 10 seconds. The average force registered by the load cell between 4 and 8 seconds is collected and reported in g.

Unwind Force

Unwind Force is measured on a Highlight Stretch Film Test Stand from Highlight Industries Inc. The test consists of stretching a 500 mm wide, 25 micron thick single-sided cling film at a target elongation (pre-set stretch) of 200%. The stretching takes place between the brake roller and a traction roller that are separated so that the stretching of the film takes place over a 17.0 cm distance. The stretch film is obtained by running the traction roller at a higher rpm than the brake roller. The film unwinding speed is 110 meters per minute. Unwinding force is measured with a load cell placed on the roller prior to the brake roller and reported in kg.

Peel Adhesion

The determination of the peel adhesion is based on AFERA 5001, test method A. The peel adhesion is the force required to remove the protective film from a test panel. As panels a 2 mm thick polished stainless steel sheet and a 3 mm thick polycarbonate sheet are used. The protective film is cut into test strips with a width of 25.4 mm and a length of 140 mm. These strips are applied onto the panel with the cling side facing the panel. Sufficient pressure is applied with a brush to cause the strip to adhere to the test panel as per the sample preparation in ASTM D5458-95. Immediately after this the strip is pulled back for 55 mm at an angle of 180° and a speed of 5 mm/s using a tensile testing instrument.

The average force required to achieve this at room temperature is recorded in g. The average of 3 measurements is reported.

**EXAMPLES**

Core & Release Layers

The resins used in the core and release layers are shown in Table 1. The resins in Table 1 are available from the Dow Chemical Company.

**Table 1: Resins Used in the Core and Release Layers**

| Product | Density (g/cm$^3$) | Melt index (MI or I2) (g/10 min) |
|---|---|---|
| Core Layer | | |
| DOWLEX™ 2645G LLDPE | 0.919 | 0.9 |
| Release Layer | | |
| LDPE 545E | 0.928 | 0.9 |

The core layer consists of 100 wt.% of DOWLEX™ 2645G LLDPE. The release layer consists of 100 wt.% of LDPE 545E.

Cling Layer

The cling layers may include a carrier resin (Resin 1) as further outlined in Tables 2 and 3 below, and a block composite polymer (BC1) as further outlined in Tables 4 and 5 below. Other carrier resins used in the cling layer are shown in Table 2 below and are available from The Dow Chemical Company (Midland, MI).

**Table 2: Carrier Resins Used in the Cling Layer**

| Product | Density (g/cm$^3$) | MI (g / 10 min) | % Crystallinity |
|---|---|---|---|
| AFFINITY™ EG8100G | 0.870 | 1.0 | 17 |
| AFFINITY™ PL1880G | 0.902 | 1.0 | 33 |
| AFFINITY™ SL8110G | 0.875 | 1.0 | 20 |
| AFFINITY™ VP8770G1 | 0.885 | 1.0 | 24 |
| ATTANE SL4102G | 0.905 | 1.0 | 39 |
| INFUSE™ 9010 | 0.877 | 0.5 | 21 |
| VERSIFY™ 2200 | 0.876 | 2.0* | 21 |
| Resin 1 | 0.870 | 1.0 | 16 |
| *Melt Flow Rate 230°C/2.16kg (ASTM D1238) | | | |

***Resin 1 Preparation***

Resin 1 was made using a solution-phase polymerization process in a well-mixed reactor such as a loop reactor or a sphere reactor at temperature from about 130 to about 300 °C, preferably from about 150 to about 200 °C, and at pressures from about 30 to about 1000 psi, preferably from about 30 to about 750 psi. The residence time in such a process is typically from about 2 to about 20 minutes, preferably from about 10 to about 20 minutes. Ethylene, solvent, catalyst, and hexene comonomer are fed continuously to the reactor. The pro-catalyst may be [[2,2'''-[1,3-propanediyl-bis(oxy-k-O)]bis[3",5,5"-tris(1,1-dimethylethyl)-5'-methyl[1,1':3',1"-terphenyl]-2'-olato-k-O]](2-)]-zirconium dimethyl. And suitable co-catalysts include modified methyl aluminoxane and/or triethylaluminum. Exemplary solvents include, but are not limited to, isoparaffins. For example, such solvents are commercially available under the name ISOPAR E from ExxonMobil Chemical Co., Houston, Texas. The resultant mixture of ethylene-based polymer and solvent is then removed from the reactor and the polymer is isolated. Additional polymerization details may be found in U.S. 9,334,349, which is incorporated herein by reference.

### Block Composite Polymer

BC1 is a specified block composite, that includes 70 wt% of an ethylene-propylene copolymer (having an ethylene content of 65 wt%) and 30 wt% of isotactic polypropylene containing approximately 2.8 wt% ethylene.

BC2 is a block composite, that includes 50 wt% of an ethylene-propylene copolymer (having an ethylene content of 65 wt%) and 50 wt% of isotactic polypropylene containing approximately 0.5 wt% ethylene.

BC3 is a specified block composite, that includes 50 wt% of an ethylene-propylene copolymer (having an ethylene content of 70 wt%) and 50 wt% of isotactic polypropylene containing approximately 12 wt% ethylene.

BC1-BC3 may be prepared by a process comprising contacting an addition polymerizable monomer or mixture of monomers under addition polymerization conditions with a composition comprising at least one addition polymerization catalyst, at least one cocatalyst, and a chain shuttling agent, said process being characterized by formation of at least some of the growing polymer chains under differentiated process conditions in two or more reactors operating under steady state polymerization conditions or in two or more zones of a reactor operating under plug flow polymerization conditions. The term, "shuttling agent" refers to a compound or mixture of compounds that is capable of causing polymeryl exchange between at least two active catalyst sites under the conditions of the polymerization. That is, transfer of a polymer fragment occurs both to and from one or more of the active catalyst sites. In contrast to a shuttling agent, a "chain transfer agent" causes termination of polymer chain growth and amounts to a one-time transfer of growing polymer from the catalyst to the transfer agent. In a preferred embodiment, the block composites or specified block composites comprise a fraction of block polymer which possesses a most probable distribution of block lengths.

Suitable processes useful in producing BC1-BC3 may be found, for example, in U.S. Patent Nos. 8,053,529, 8,686,087, and 8,716,400. In particular, the polymerization is desirably carried out as a continuous polymerization, preferably a continuous, solution polymerization, in which catalyst components, monomers, and optionally solvent, adjuvants, scavengers, and polymerization aids are continuously supplied to one or more reactors or zones and polymer product continuously removed therefrom. Within the scope of the terms "continuous" and "continuously" as used in this context are those processes in which there are intermittent additions of reactants and removal of products at small regular or irregular intervals, so that, over time, the overall process is substantially continuous. The chain shuttling agent(s) may be added at any point during the polymerization including in the first reactor or zone, at the exit or slightly before the exit of the first reactor, or between the first reactor or zone and the second or any subsequent reactor or zone. Due to the difference in monomers, temperatures, pressures or other difference in polymerization conditions between at least two of the reactors or zones connected in series, polymer segments of differing composition such as comonomer content, crystallinity, density, tacticity, regio-regularity, or other chemical or physical difference, within the same molecule are formed in the different reactors or zones. The size of each segment or block is determined by continuous polymer reaction conditions, and preferably is a most probable distribution of polymer sizes.

When producing a block polymer having an ethylene block (EB) and a crystalline alpha-olefin block (CAOB) in two reactors or zones it is possible to produce the EB in the first reactor or zone and the CAOB in the second reactor or zone or to produce the CAOB in the first reactor or zone and the EB in the second reactor or zone. It may be more advantageous to produce EB in the first reactor or zone with fresh chain shuttling agent added. The presence of increased levels of ethylene in the reactor or zone producing EB may lead to much higher molecular weight in that reactor or zone than in the zone or reactor producing CAOB. The fresh chain shuttling agent will reduce the MW of polymer in the reactor or zone producing EB thus leading to better overall balance between the length of the EB and CAOB segments.

When operating reactors or zones in series it is necessary to maintain diverse reaction conditions such that one reactor produces EB and the other reactor produces CAOB. Carryover of ethylene from the first reactor to the second reactor (in series) or from the second reactor back to the first reactor through a solvent and monomer recycle system is preferably minimized. There are many possible unit operations to remove this ethylene, but because ethylene is more volatile than higher alpha olefins one simple way is to remove much of the unreacted ethylene through a flash step by reducing the pressure of the effluent of the reactor producing EB and flashing off the ethylene. An exemplary approach is to avoid additional unit operations and to utilize the much greater reactivity of ethylene versus higher alpha olefins such that the conversion of ethylene across the EB reactor approaches 100%. The overall conversion of monomers across the reactors can be controlled by maintaining the alpha olefin conversion at a high level (90 to 95%).

Exemplary catalysts and catalyst precursors for use to from the block composites and specified block composites include metal complexes such as disclosed in, e.g., International Publication Nos. WO 2005/090426 and WO 2011/016991 A2. Other exemplary catalysts are also disclosed in U.S. Patent Publication Nos. 2006/0199930, 2007/0167578, and 2008/0311812; U.S. Patent Nos. 7,355,089, 8,053,529, 8,686,087, and 8,716,400; and International Publication No. WO 2009/012215.

Process information for preparing BC1 to BC3 are shown in Table 3, below.

**Table 3**

| Material | BC1 | | BC2 | | BC3 | |
|---|---|---|---|---|---|---|
| Reactor | 1st Reactor | 2nd Reactor | 1st Reactor | 2nd Reactor | 1st Reactor | 2nd Reactor |
| Reactor Control Temp.(°C) | 105 | 115 | 105 | 115 | 105 | 113 |
| Solvent Feed (lb/hr) | 175 | 285 | 335 | 564 | 505 | 591 |
| Propylene Feed (lb/hr) | 21.2 | 24.6 | 28.18 | 73.84 | 32.62 | 87.68 |
| Ethylene Feed (lb/hr) | 39.7 | 0.8 | 51.7 | 0 | 63.68 | 10.11 |
| Hydrogen Feed SCCM) | 0 | 0 | 67.74 | 0 | 0 | 0 |
| Reactor Ethylene Conc. (g/L) | 0.71 | 1.55 | 4.14 | 1.96 | 1.2 | 0.19 |
| Reactor Propylene Conc. (g/L) | 1.78 | 2.16 | 1.97 | 2.69 | 2.02 | 2.31 |
| Catalyst Efficiency (gPoly/gM) *1.0E6 | 0.73 | 0.24 | 2.68 | 0.23 | 0.47 | 0.42 |
| Catalyst Flow (lb/hr) | 0.41 | 0.54 | 0.29 | 3.26 | 0.67 | 0.74 |
| Catalyst Conc. (ppm) | 200 | 200 | 99.98 | 99.98 | 300 | 300 |
| Cocatalyst-1 Flow (lb/hr) | 0.68 | 0.78 | 0.27 | 3 | 0.4 | 0.45 |
| Cocatalyst-1 Conc. (ppm) | 1399 | 1399 | 1995 | 1995 | 4992 | 4692 |
| Cocatalyst-2 Flow (lb/hr) | 1.47 | 0.39 | 0.34 | 1.86 | 0.31 | 0.17 |
| Cocatalyst-2 Conc. (ppm) | 1494 | 1494 | 995 | 494 | 2996 | 1995 |
| DEZ Flow (lb/hr) | 1.77 | 0 | 1.6 | 0 | 3 | 0 |
| DEZ Conc. (ppm) | 29987 | 0 | 37503 | 0 | 35001 | 0 |

A comparative Crystalline Block Composite (CBC1) is synthesized in dual reactors in series, using a similar method as described above with respect to the BC1 to BC3 samples. CBC1 is a crystalline block composite, that includes 50 wt% of an ethylene-propylene copolymer (having an ethylene content of 82 wt%) and 50 wt% of isotactic polypropylene containing approximately 1.0 wt% ethylene.

BC1 to BC3 and Crystalline Block Composite (CBC1) are characterized as appropriate by Differential Scanning Calorimetry (DSC), C[13] Nuclear Magnetic Resonance (NMR), Gel Permeation Chromatography (GPC), Xylene Soluble Fractionation Analysis and high temperature liquid chromatography (HTLC) fractionation. These are described above and in U.S. Patent Publication Nos. 2011/0082257, US2011/0082258 and 2011/0082249, all published on April 7, 2011 and are incorporated herein by reference with respect to descriptions of the analysis methods.

The measured properties of BC1 to BC3 and CBC1 are provided in Tables 4 and 5, below.

**Table 4**

| Material | MFR (230°C/ 2.16 kg) | Density (g/cm$^3$) | Mw Kg/mol | Mw/Mn | Total wt% $C_2$ (NMR) | Tm (°C) | Tc (°C) | Melt Enthalpy (J/g) |
|---|---|---|---|---|---|---|---|---|
| BC1 | 6.5 | 0.864 | 101.2 | 2.66 | 45.9 | 121 | 52 | 25 |
| BC2 | 6.5 | 0.879 | 130 | 2.98 | 35.5 | 33, 137 | 96 | 52 |

(continued)

| Material | MFR (230°C/ 2.16 kg) | Density (g/cm$^3$) | Mw Kg/mol | Mw/Mn | Total wt% C$_2$ (NMR) | Tm (°C) | Tc (°C) | Melt Enthalpy (J/g) |
|---|---|---|---|---|---|---|---|---|
| BC3 | 5.5 | 0.868 | 128 | 2.91 | 41.4 | 59 | 42 | 25 |
| CBC1 | 9.8 | 19.9 | 104 | 2.73 | 47.6 | 108, 130 | 89 | 95 |

**Table 5**

| Material | Modified Block Composite Index | Block Composite Index | Crystalline Block Composite Index |
|---|---|---|---|
| BC1 | 0.570 | Not applicable | Not applicable |
| BC2 | Not applicable | 0.482 | Not applicable |
| BC3 | 0.660 | Not applicable | Not applicable |
| CBC1 | Not applicable | Not applicable | 0.549 |

The Modified Block Composite Index of BC1 and BC3 are determined by the methods described below. The Block Composite Index of BC2 is determined by the methods described in U.S. Patent No. 8,686,087. The Crystalline Block Composite of comparative CBC1 is determined by the methods described in WO 2016/0028961 A1.

Typical Block Composite Index (BCI) is calculated based on Xylene Soluble Fractionation. These calculations and the Xylene Soluble Fractionation Analysis test method for determining the xylene fraction are described in detail in U.S. Patent Nos. 8,716,400 and 8,802,774, which is incorporated herein by reference, in which soluble fraction provides an estimate of unbound ethylene polymer. However, for specified block composite compositions (such as BC1) that have lower molecular weight of crystalline alpha-olefin polymer (CAOP, in this case, iPP), the iPP molecules tend to be more soluble in xylene soluble. In this particular case, the xylene soluble fraction may contain the lower molecular weight iPP, the diblocks with short segments of iPP and unbound ethylene polymer. Another specific situation is for some specified block composites of which CAOP has relative low melting temperature or the melting temperature of CAOP significantly overlaps with that of ethylene polymer. In this specific case, the xylene fractionation is not effective in separating CAOP and EP, thus xylene soluble fraction may contain lower melting CAOP, diblocks of EB and CAOP, in addition to unbound ethylene polymer. For these block composites, MBCI provide an estimate of the quantity of block copolymer within the block composite under the assumption that the ratio of EB to CAOB within the diblock is the same as the ratio of ethylene to alpha-olefin in the overall block composite. This assumption is valid for these statistical olefin block copolymers based on the understanding of the individual catalyst kinetics and the polymerization mechanism for the formation of the diblocks via chain shuttling catalysis as described in the specification. This MBCI analysis shows that the amount of isolated PP is less than if the polymer was a simple blend of a propylene homopolymer (in this example the CAOP/AOP) and polyethylene (in this example the EP). Consequently, the polyethylene fraction contains an appreciable amount of propylene that would not otherwise be present if the polymer was simply a blend of polypropylene and polyethylene. To account for this "extra propylene", a mass balance calculation can be performed to estimate the MBCI from the amount of the polypropylene and polyethylene fractions and the weight % propylene present in each of the fractions that are separated by HTLC.

*Modified Block Composite Index Calculations*

The corresponding MBCI calculation for BC1 and BC3 is provided in Table 6, below.

**Table 6**

| Line # | Variable | Source | BC1 | BC3 |
|---|---|---|---|---|
| 1 | Overall wt% C3 Total | Measured | 54.1 | 58.6 |
| 2 | wt% C3 in PP block/polymer | Measured | 97.2 | 88.0 |
| 3 | wt% C3 in PE block/polymer | Measured | 35.0 | 30.0 |

(continued)

| Line # | Variable | Source | BC1 | BC3 |
|---|---|---|---|---|
| 4 | wt fraction PP (in block or polymer) | Eq. 2 below | 0.300 | 0.500 |
| 5 | wt fraction PE (in block or polymer) | 1-Line 4 | 0.700 | 0.500 |
| | Analysis of HTLC Separation | | | |
| 6 | wt fraction isolated PP | Measured | 0.136 | 0.163 |
| 7 | wt fraction PE fraction | Measured | 0.864 | 0.837 |
| 8 | wt% C3 in PE-fraction | Eq. 4 below | 47.316 | 52.9 |
| 9 | wt fraction PP-diblock in PE fraction | Eq. 6 below | 0.198 | 0.394 |
| 10 | wt fraction PE in PE fraction | 1-Line 10 | 0.802 | 0.606 |
| 11 | wt fraction Diblock in PE fraction | 10/Line 4 | 0.660 | 0.789 |
| | | | | |
| 12 | Modified Block Composite Index (MBCI) | Eq. 7 below | 0.570 | 0.660 |

Referring to Table 6, above, the MBCI is measured by first determining a summation of the weight % propylene from each component in the polymer according to Equation 1, below, which results in the overall weight % propylene/C3 (of the whole polymer). This mass balance equation can be used to quantify the amount of the PP and PE present in the block copolymer. This mass balance equation can also be used to quantify the amount of PP and PE in a binary blend or extended to a ternary, or n-component blend. For the BCs, the overall amount of PP or PE is contained within the blocks present in the block copolymer and the unbound PP and PE polymers.

$$\mathrm{Wt\%C3_{Overall}} = w_{PP}(wt\%C3_{PP}) + w_{PE}(wt\%C3_{PE}) \qquad \text{Eq. 1}$$

where

$w_{pp}$ = weight fraction of PP in the polymer

$w_{PE}$ = weight fraction of PE in the polymer

$wt\%C3_{PP}$ = weight percent of propylene in PP component or block

$wt\%C3_{PE}$ = weight percent of propylene in PE component or block

Note that the overall weight % of propylene (C3) is measured from C[13] NMR or some other composition measurement that represents the total amount of C3 present in the whole polymer. The weight % propylene in the PP block ($wt\%C3_{pp}$) is set to 100 (if applicable) or if otherwise known from its DSC melting point, NMR measurement, or other composition estimate, that value can be put into its place. Similarly, the weight % propylene in the PE block ($wt\%C3_{PE}$) is set to 100 (if applicable) or if otherwise known from its DSC melting point, NMR measurement, or other composition estimate, that value can be put into its place. The weight % of C3 is shown in Table 5.

Calculating the Ratio of PP to PE in the specified block composite: Based on Equation 1, the overall weight fraction of PP present in the polymer can be calculated using Equation 2 from the mass balance of the total C3 measured in the polymer. Alternatively, it could also be estimated from a mass balance of the monomer and comonomer consumption during the polymerization. Overall, this represents the amount of PP and PE present in the polymer regardless of whether it is present in the unbound components or in the block copolymer. For a conventional blend, the weight fraction of PP and weight fraction of PE corresponds to the individual amount of PP and PE polymer present. For the specified block composite, it is assumed that the ratio of the weight fraction of PP to PE also corresponds to the average block ratio between PP and PE present in this statistical block copolymer.

$$w_{PP} = \frac{wt\%C3_{Overall} - wt\%C3_{PE}}{wt\% C3_{PP} - wt\%C3_{PE}} \qquad \text{Eq. 2}$$

where

$w_{PP}$ = weight fraction of PP present in the whole polymer

$wt\%C3_{PP}$ = weight percent of propylene in PP component or block

$wt\%C3_{PE}$ = weight percent of propylene in PE component or block

To estimate the amount of the block copolymer (diblock) in the specified Block Composite, apply Equations 3 through 5, and the amount of the isolated PP that is measured by HTLC analysis is used to determine the amount of polypropylene present in the diblock copolymer. The amount isolated or separated first in the HTLC analysis represents the 'unbound PP' and its composition is representative of the PP block present in the diblock copolymer. By substituting the overall weight % C3 of the whole polymer in the left hand side of Equation 3, and the weight fraction of PP (isolated from HTLC) and the weight fraction of PE (separated by HTLC) into the right hand side of Equation 3, the weight % of C3 in the PE fraction can be calculated using Equations 4 and 5. The PE fraction is described as the fraction separated from the unbound PP and contains the diblock and unbound PE. The composition of the isolated PP is assumed to be the same as the weight % propylene in the PP block as described previously.

$$wt\% C3_{Overall} = w_{PP\,isolated}(wt\%C3_{PP}) + w_{PE\text{-}fraction}(wt\%C3_{PE-fraction})$$

Eq. 3

$$wt\%C3_{PE-fraction} = \frac{wt\%C3_{Overall} - w_{PPisolated}(wt\%C3_{PP})}{w_{PE-fraction}}$$

Eq. 4

$$w_{PE-fraction} = 1 - w_{PPisolated}$$
Eq. 5

where

$w_{PPisolated}$ = weight fraction of isolated PP from HTLC
$w_{PE\text{-}fraction}$ = weight fraction of PE separated from HTLC, containing the diblock and unbound PE
$wt\%C3_{PP}$ = weight % of propylene in the PP; which is also the same amount of propylene present in the PP block and in the unbound PP
$wt\%C3_{PE\text{-}fraction}$ = weight % of propylene in the PE-fraction that was separated by HTLC
$wt\%C3_{Overall}$ = overall weight % propylene in the whole polymer

The amount of wt% C3 in the polyethylene fraction from HTLC represents the amount of propylene present in the block copolymer fraction that is above the amount present in the 'unbound polyethylene'. To account for the 'additional' propylene present in the polyethylene fraction, the only way to have PP present in this fraction is for the PP polymer chain to be connected to a PE polymer chain (or else it would have been isolated with the PP fraction separated by HTLC). Thus, the PP block remains adsorbed with the PE block until the PE fraction is separated.
The amount of PP present in the diblock is calculated using Equation 6.

$$w_{PP-diblock} = \frac{wt\%C3_{PE-fraction} - wt\%C3_{PE}}{wt\% C3_{PP} - wt\%C3_{PE}}$$

Eq. 6

Where

wt%C3$_{PE\text{-}fraction}$ = weight % of propylene in the PE-fraction that was separated by HTLC (Equation 4)
wt%C3$_{PP}$ = weight % of propylene in the PP component or block (defined previously)
wt%C3$_{PE}$ = weight % of propylene in the PE component or block (defined previously)
w$_{PP\text{-}diblock}$ = weight fraction of PP in the diblock separated with PE-fraction by HTLC

The amount of the diblock present in this PE fraction can be estimated by assuming that the ratio of the PP block to PE block is the same as the overall ratio of PP to PE present in the whole polymer. For example, if the overall ratio of PP to PE is 1:1 in the whole polymer, then it assumed that the ratio of PP to PE in the diblock is also 1:1. Thus, the weight fraction of diblock present in the PE fraction would be weight fraction of PP in the diblock (w$_{PP\text{-}diblock}$) multiplied by two. Another way to calculate this is by dividing the weight fraction of PP in the diblock (w$_{PP\text{-}diblock}$) by the weight fraction of PP in the whole polymer (Equation 2).

To further estimate the amount of diblock present in the whole polymer, the estimated amount of diblock in the PE fraction is multiplied by the weight fraction of the PE fraction measured from HTLC. To estimate the modified block composite index, the amount of diblock copolymer is determined by Equation 7.1 or 7.2, respectively. To estimate the MBCI, the weight fraction of diblock in the PE fraction calculated using Equation 6 is divided by the overall weight fraction of PP (as calculated in Equation 2) and then multiplied by the weight fraction of the PE fraction. The value of the MBCI can range from 0 to 1.0, wherein 1.0 would be equal to 100% diblock and zero would be for a material such as a traditional blend or random copolymer.

$$MBCI = \frac{w_{PP-diblock}}{w_{PP}} \cdot w_{PE-fraction} \qquad \text{Eq. 7}$$

Where

w$_{PP\text{-}diblock}$ = weight fraction of PP in the diblock separated with the PE-fraction by HTLC (Equation 6)

w$_{PP}$ = weight fraction of PP in the polymer

w$_{PE\text{-}fraction}$ = weight fraction of PE separated from HTLC, containing the diblock and unbound PE (Equation 5)

For example, if an isotactic polypropylene block/ethylene-propylene block polymer (diblock polymer) contains a total of 53.3 wt% C3 and is made under the conditions to produce an iPP polymer containing 99 wt% C3 and an PE polymer with 10 wt% C3, the weight fractions of PP and PE are 0.487 to 0.514, respectively (as calculated using Equation 2).

**Multilayer Films**

The multilayer films are fabricated using a semi-industrial scale Alpine blown film three-layer coextrusion line. Each of the films is a three layer film having an A/B/C structure with relative thicknesses of 15%/70%/15% for a total thickness of 25 microns. The Alpine blown film line is configured as shown in Table 7 to prepare the multilayer films:

**Table 7: Blown Film Conditions**

| Main components | ALPINE inner bubble control |
|---|---|
| | MACRO dual lip cooling ring DOTECO Profix thickness profile control KUNDIG capacitive thickness sensor Tandem winder(contact/surface mode) |
| Coex screw diameter (A & C) | 50 mm |
| Coex screw length (A & C) | 30 x D |
| Coex screw diameter (B) | 65 mm |
| Coex screw diameter (B) | 30 x D |
| Die Size | 200 mm |
| Maximum output (coex) | 220 kg/h |

Multilayer films having the compositions and layers as shown in Table 8:

**Table 8: Multilayer Film Structures**

| Description | Layer A (Cling) 15% | Layer B (Core) 70% | Layer C (Release) 15% |
|---|---|---|---|
| Comparative Film A | AFFINITY EG8100G | DOWLEX 2645 | LDPE 545E |
| Inventive Film A1 | AFFINITY EG8100G & BC1 90/10 | DOWLEX 2645 | LDPE 545E |
| Comparative Film B | AFFINITY SL8110G | DOWLEX 2645 | LDPE 545E |
| Inventive Film B1 | AFFINITY SL8110G/BC1 90/10 | DOWLEX 2645 | LDPE 545E |
| Comparative Film C | AFFINITY VP8770G1 | DOWLEX 2646 | LDPE 545E |
| Inventive Film C1 | AFFINITY VP8770G1/BC1 90/10 | DOWLEX 2645 | LDPE 545E |
| Comparative Film D | Resin 1 | DOWLEX 2645 | LDPE 545E |
| Inventive Film D1 | Resin1/BC1 98/2 | DOWLEX 2645 | LDPE 545E |
| Inventive Film D2 | Resin1/BC1 95/5 | DOWLEX 2645 | LDPE 545E |
| Inventive Film D3 | Resin1/BC1 90/10 | DOWLEX 2645 | LDPE 545E |
| Inventive Film D4 | Resin1/BC1 85/15 | DOWLEX 2645 | LDPE 545E |
| Inventive Film D5 | Resin1/BC1 50/50 | DOWLEX 2645 | LDPE 545E |
| Inventive Film D6 | Resin1/BC2 99/1 | DOWLEX 2645 | LDPE 545E |
| Inventive Film D7 | Resin1/BC2 98/2 | DOWLEX 2645 | LDPE 545E |
| Inventive Film D8 | Resin1/BC2 95/5 | DOWLEX 2645 | LDPE 545E |
| Inventive Film D9 | Resin1/BC2 90/10 | DOWLEX 2645 | LDPE 545E |
| Inventive Film D10 | Resin1/BC3 90/10 | DOWLEX 2645 | LDPE 545E |
| Inventive Film D11 | Resin 1/INFUSE 9010/BC1 45/45/10 | DOWLEX 2645 | LDPE 545E |
| Comparative Film E | AFFINITY PL1880G/BC1 90/10 | DOWLEX 2645 | LDPE 545E |
| Comparative Film F | ATTANE SL4102G/BC1 90/10 | DOWLEX 2645 | LDPE 545E |
| Comparative Film G | VERSIFY 2200/BC 1 90/10 | DOWLEX 2645 | LDPE 545E |
| Comparative Film H | AFFINITY EG8100G/CBC1 90/10 | DOWLEX 2645 | LDPE 545E |

**Table 9: Measured Film Properties**

| Description | Cling ASTM D5458-95 [g] | Stretched Cling [g] at 80% stretch | Stretched Cling [g] at 100% stretch | Stretched Cling [g] at 150% stretch | Stretched Cling [g] at 250% stretch | Unwinding Force [kg] |
|---|---|---|---|---|---|---|
| Comparative Film A | 284 | | 385 | | | 7.7 |
| Inventive Film A1 | 281 | | 471 | | | 7.9 |
| Comparative Film B | 218 | | 178 | | | 7.0 |
| Inventive Film B1 | 260 | | 324 | | | 7.7 |
| Comparative Film C | 178 | | 76 | | | 4.9 |

(continued)

| Description | Cling ASTM D5458-95 [g] | Stretched Cling [g] at 80% stretch | Stretched Cling [g] at 100% stretch | Stretched Cling [g] at 150% stretch | Stretch ed Cling [g] at 250% stretch | Unwin ding Force [kg] |
|---|---|---|---|---|---|---|
| Inventive Film C1 | 230 | | 131 | | | 5.4 |
| Comparative Film D | 236 | 211 | 169 | 147 | 248 | 8.9 |
| Inventive Film D1 | 250 | 306 | 310 | 315 | 290 | 8.6 |
| Inventive Film D2 | 324 | 342 | 332 | 331 | | 9.2 |
| Inventive Film D3 | 262 | 424 | 440 | 355 | 268 | 9.8 |
| Inventive Film D4 | 324 | 484 | 495 | 434 | | 9.8 |
| Inventive Film D5 | 393 | 559 | 529 | 468 | | 9.8 |
| Inventive Film D6 | 296 | 364 | 406 | | | 7.5 |
| Inventive Film D7 | 276 | 392 | 345 | | | 7.8 |
| Inventive Film D8 | 307 | 380 | 404 | | | 8.7 |
| Inventive Film D9 | 332 | 437 | 386 | 349 | | 8.6 |
| Inventive Film D10 | 345 | 483 | 495 | 421 | | 9.0 |
| Inventive Film D11 | 279 | 356.5 | 398.8 | | | 12.7 |
| Comparative Film E | 65 | | <10 | <10 | | 2.0 |
| Comparative Film F | 51 | | <10 | <10 | | 2.8 |
| Comparative Film G | 15 | | <10 | <10 | | 1.8 |
| Comparative Film H | 191 | 196 | 131 | | | 5.5 |

As shown in Table 9, the cling force performance of the inventive films improve with the inclusion of BC1, BC2, or BC3. In Table 10 below, improved adhesion performance is shown for comparative and inventive films that may be used as a protective film.

**Table 10: Adhesion for Protective Film Applications:**

| | Adhesion to stainless steel [g] | Adhesion to Polycarbonate sheet [g] |
|---|---|---|
| Comparative Film B | 1.23 | 1.58 |

(continued)

|  | Adhesion to stainless steel [g] | Adhesion to Polycarbonate sheet [g] |
|---|---|---|
| Inventive Film B 1 | 1.48 | 2.41 |
| Comparative Film D | 1.26 | 2.36 |
| Inventive Film D1 | 1.55 | 3.56 |
| Inventive Film D2 | 1.66 | 4.70 |
| Inventive Film D3 | 1.73 | 4.02 |
| Inventive Film D5 |  | 4.26 |
| Inventive Film D6 |  | 4.84 |
| Inventive Film D7 |  | 4.54 |
| Inventive Film D8 |  | 5.83 |
| Inventive Film D11 |  | 5.50 |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in another document, the meaning or definition assigned to that term in this document shall govern.

## Claims

1. A multilayer film comprising a cling layer and a release layer, wherein the cling layer comprises:

   an ethylene-based carrier resin having a crystallinity ranging from 10% to 30%; and
   from 0.5 to 50.0 wt.% of a block composite or a specified block composite,
   wherein the block composite and specified block composite comprise an ethylene based soft co-polymer, an alpha-olefin based hard co-polymer, and a block copolymer having an ethylene soft block segment and an alpha-olefin hard block segment, wherein the ethylene soft block segment of the block copolymer has the same composition as the ethylene based soft co-polymer of the block composite or specified block composite, and the alpha-olefin hard block segment of the block copolymer has the same composition as the alpha-olefin based hard co-polymer of the block composite or specified block composite, and wherein:

   - the ethylene based soft co-polymer of the block composite has an ethylene content of from 10 mol% to 90 mol%, and the alpha-olefin based hard co-polymer of the block composite has an alpha-olefin content of greater than 90 mol%, and;
   - the ethylene based soft co-polymer of the specified block composite has an ethylene content of from 78 mol% to 90 mol%, and the alpha-olefin based hard co-polymer of the specified block composite has an alpha-olefin content of from 61 mol% to 90 mol%.

2. The film of claim 1 wherein the carrier resin is an ethylene/alpha-olefin elastomer.

3. The film of claims 1-2, wherein the block composite or specified block composite may have a total ethylene content of 25 wt.% to 75 wt.%, based on the total weight of the block composite or specified block composite.

4. The film of claims 1-3, wherein the release layer comprises a low density polyethylene having a density of from 0.918 to 0.935 g/cc, or a linear low density polyethylene having a density of from 0.916 to 0.945 g/cc, or blends thereof.

**5.** The film of claim 4, wherein the release layer comprises a low density polyethylene having a density of from 0.918 to 0.935 g/cc.

**6.** The film of claims 1-5, wherein the multilayer film further comprises a core layer positioned between the cling layer and the release layer, and the core layer comprises a low density polyethylene having a density of from 0.918 to 0.935 g/cc, a linear low density polyethylene having a density of from 0.916 to 0.945 g/cc, or blends thereof.

**7.** The film of claim 6, wherein the core layer comprises 100 wt.% of linear low density polyethylene or a blend of 80 wt.% to 95 wt.% of linear low density polyethylene and from 5 wt.% to 20 wt.% of low density polyethylene.

**8.** The film of claims 1-7, wherein the multilayer film has a thickness of from 10 microns to 50 microns.

**9.** The film of claims 1-8, wherein the cling layer has a thickness of from 5-20 percent of the overall thickness of the film.

**10.** The film of claims 1-9, wherein the release layer has a thickness of from 5-20 percent of the overall thickness of the film.

**11.** A stretch cling film comprising the multilayer film of any one of claims 1-10.

**12.** The stretch cling film of claim 11, wherein the stretch cling film is an agricultural stretch wrap film.

**13.** A protective film comprising the multilayer film of any one of claims 1-10.

**14.** A method of making the multilayer film according to any one of claims 1-10, wherein the method comprises:

coextruding a cling layer composition and a release layer composition to form a tube having a cling layer and a release layer; and
cooling the tube to form a multilayer film;
wherein the cling layer composition comprises:

a carrier resin having a crystallinity ranging from 10% to 30%; and
from 0.5 to 50.0 wt.% of a block composite or a specified block composite as defined in claim 1.

**Patentansprüche**

**1.** Eine mehrschichtige Folie, die eine Haftschicht und eine Trennschicht beinhaltet, wobei die Haftschicht Folgendes beinhaltet:

ein Trägerharz auf Ethylenbasis mit einer Kristallinität, die von 10 % bis 30 % reicht; und
zu 0,5 bis 50,0 Gew.-% einen Blockverbundstoff oder einen spezifizierten Blockverbundstoff,
wobei der Blockverbundstoff und spezifizierte Blockverbundstoff ein weiches Copolymer auf Ethylenbasis, ein hartes Copolymer auf Alpha-Olefin-Basis und ein Blockcopolymer mit einem Ethylen-Weichblocksegment und einem Alpha-Olefin-Hartblocksegment beinhalten, wobei das Ethylen-Weichblocksegment des Blockcopolymers die gleiche Zusammensetzung aufweist wie das weiche Copolymer auf Ethylenbasis des Blockverbundstoffs oder spezifizierten Blockverbundstoffs und das Alpha-Olefin-Hartblocksegment des Blockcopolymers die gleiche Zusammensetzung aufweist wie das harte Copolymer auf Alpha-Olefin-Basis des Blockverbundstoffs oder spezifizierten Blockverbundstoffs, und wobei:

- das weiche Copolymer auf Ethylenbasis des Blockverbundstoffs einen Ethylengehalt von 10 Mol-% bis 90 Mol-% aufweist und das harte Copolymer auf Alpha-Olefin-Basis des Blockverbundstoffs einen Alpha-Olefin-Gehalt von größer als 90 Mol-% aufweist und;
- das weiche Copolymer auf Ethylenbasis des spezifizierten Blockverbundstoffs einen Ethylengehalt von 78 Mol-% bis 90 Mol-% aufweist und das harte Copolymer auf Alpha-Olefin-Basis des spezifizierten Blockverbundstoffs einen Alpha-Olefin-Gehalt von 61 Mol-% bis 90 Mol-% aufweist.

**2.** Folie gemäß Anspruch 1, wobei das Trägerharz ein Ethylen/Alpha-Olefin-Elastomer ist.

**3.** Folie gemäß Ansprüchen 1-2, wobei der Blockverbundstoff oder spezifizierte Blockverbundstoff einen Gesamtethylengehalt von 25 Gew.-% bis 75 Gew.-%, bezogen auf das Gesamtgewicht des Blockverbundstoffs oder spezifizierten Blockverbundstoffs, aufweisen kann.

4. Folie gemäß Ansprüchen 1-3, wobei die Trennschicht ein Polyethylen niederer Dichte mit einer Dichte von 0,918 bis 0,935 g/cm$^3$ oder ein lineares Polyethylen niederer Dichte mit einer Dichte von 0,916 bis 0,945 g/cm$^3$ oder Gemische davon beinhaltet.

5. Folie gemäß Anspruch 4, wobei die Trennschicht ein Polyethylen niederer Dichte mit einer Dichte von 0,918 bis 0,935 g/cm$^3$ beinhaltet.

6. Folie gemäß Ansprüchen 1-5, wobei die mehrschichtige Folie ferner eine zwischen der Haftschicht und der Trennschicht positionierte Kernschicht beinhaltet und die Kernschicht ein Polyethylen niederer Dichte mit einer Dichte von 0,918 bis 0,935 g/cm$^3$, ein lineares Polyethylen niederer Dichte mit einer Dichte von 0,916 bis 0,945 g/cm$^3$ oder Gemische davon beinhaltet.

7. Folie gemäß Anspruch 6, wobei die Kernschicht zu 100 Gew.-% lineares Polyethylen niederer Dichte oder ein Gemisch von 80 Gew.-% bis 95 Gew.-% lineares Polyethylen niederer Dichte und zu 5 Gew.-% bis 20 Gew.-% Polyethylen niederer Dichte beinhaltet.

8. Folie gemäß Ansprüchen 1-7, wobei die mehrschichtige Folie eine Dicke von 10 Mikrometern bis 50 Mikrometern aufweist.

9. Folie gemäß Ansprüchen 1-8, wobei die Haftschicht eine Dicke von 5-20 Prozent der Gesamtdicke der Folie aufweist.

10. Folie gemäß Ansprüchen 1-9, wobei die Trennschicht eine Dicke von 5-20 Prozent der Gesamtdicke der Folie aufweist.

11. Eine Dehnhaftfolie, die die mehrschichtige Folie gemäß einem der Ansprüche 1-10 beinhaltet.

12. Dehnhaftfolie gemäß Anspruch 11, wobei die Dehnhaftfolie eine landwirtschaftliche Dehnwickelfolie ist.

13. Eine Schutzfolie, die die mehrschichtige Folie gemäß einem der Ansprüche 1-10 beinhaltet.

14. Ein Verfahren zum Herstellen der mehrschichtigen Folie gemäß einem der Ansprüche 1-10, wobei das Verfahren Folgendes beinhaltet:

Coextrudieren einer Haftschichtzusammensetzung und einer Trennschichtzusammensetzung, um eine Röhre mit einer Haftschicht und einer Trennschicht zu bilden; und
Kühlen der Röhre, um eine mehrschichtige Folie zu bilden;
wobei die Haftschichtzusammensetzung Folgendes beinhaltet:

ein Trägerharz mit einer Kristallinität, die von 10 % bis 30 % reicht; und
zu 0,5 bis 50,0 Gew.-% einen Blockverbundstoff oder einen spezifizierten Blockverbundstoff, wie in Anspruch 1 definiert.

## Revendications

1. Un film multicouche comprenant une couche auto-adhérente et une couche anti-adhésive, où la couche auto-adhérente comprend :

une résine porteuse à base d'éthylène ayant une cristallinité comprise dans l'intervalle allant de 10 % à 30 % ; et
de 0,5 à 50,0 % en poids d'un composite séquencé ou d'un composite séquencé spécifié,
où le composite séquencé et le composite séquencé spécifié comprennent un copolymère mou à base d'éthylène, un copolymère dur à base d'alpha-oléfine, et un copolymère séquencé ayant un segment de séquence molle d'éthylène et un segment de séquence dure d'alpha-oléfine, où le segment de séquence molle d'éthylène du copolymère séquencé a la même composition que le copolymère mou à base d'éthylène du composite séquencé ou du composite séquencé spécifié, et le segment de séquence dure d'alpha-oléfine du copolymère séquencé a la même composition que le copolymère dur à base d'alpha-oléfine du composite séquencé ou du composite séquencé spécifié, et où :

- le copolymère mou à base d'éthylène du composite séquencé a une teneur en éthylène allant de 10 % en moles à 90 % en moles, et le copolymère dur à base d'alpha-oléfine du composite séquencé a une teneur en alpha-oléfine supérieure à 90 % en moles, et ;
- le copolymère mou à base d'éthylène du composite séquencé spécifié a une teneur en éthylène allant de 78 % en moles à 90 % en moles, et le copolymère dur à base d'alpha-oléfine du composite séquencé spécifié a une teneur en alpha-oléfine allant de 61 % en moles à 90 % en moles.

2. Le film de la revendication 1 où la résine porteuse est un élastomère d'éthylène/alpha-oléfine.

3. Le film des revendications 1 à 2, où le composite séquencé ou le composite séquencé spécifié peut avoir une teneur totale en éthylène de 25 % en poids à 75 % en poids, rapporté au poids total du composite séquencé ou du composite séquencé spécifié.

4. Le film des revendications 1 à 3, où la couche anti-adhésive comprend un polyéthylène basse densité ayant une masse volumique allant de 0,918 à 0,935 g/cm$^3$, ou un polyéthylène basse densité linéaire ayant une masse volumique allant de 0,916 à 0,945 g/cm$^3$, ou des mélanges homogènes de ceux-ci.

5. Le film de la revendication 4, où la couche anti-adhésive comprend un polyéthylène basse densité ayant une masse volumique allant de 0,918 à 0,935 g/cm$^3$.

6. Le film des revendications 1 à 5, où le film multicouche comprend en outre une couche de cœur positionnée entre la couche auto-adhérente et la couche anti-adhésive, et la couche de cœur comprend un polyéthylène basse densité ayant une masse volumique allant de 0,918 à 0,935 g/cm$^3$, un polyéthylène basse densité linéaire ayant une masse volumique allant de 0,916 à 0,945 g/cm$^3$, ou des mélanges homogènes de ceux-ci.

7. Le film de la revendication 6, où la couche de cœur comprend 100 % en poids de polyéthylène basse densité linéaire ou un mélange homogène de 80 % en poids à 95 % en poids de polyéthylène basse densité linéaire et de 5 % en poids à 20 % en poids de polyéthylène basse densité.

8. Le film des revendications 1 à 7, où le film multicouche a une épaisseur faisant de 10 microns à 50 microns.

9. Le film des revendications 1 à 8, où la couche auto-adhérente a une épaisseur faisant de 5 à 20 pour cent de l'épaisseur globale du film.

10. Le film des revendications 1 à 9, où la couche anti-adhésive a une épaisseur faisant de 5 à 20 pour cent de l'épaisseur globale du film.

11. Un film auto-adhérent étirable comprenant le film multicouche de l'une quelconque des revendications 1 à 10.

12. Le film auto-adhérent étirable de la revendication 11, où le film auto-adhérent étirable est un film d'emballage étirable agricole.

13. Un film de protection comprenant le film multicouche de l'une quelconque des revendications 1 à 10.

14. Un procédé de fabrication du film multicouche selon l'une quelconque des revendications 1 à 10, où le procédé comprend :

la co-extrusion d'une composition de couche auto-adhérente et d'une composition de couche anti-adhésive afin de former un tube ayant une couche auto-adhérente et une couche anti-adhésive ; et
le refroidissement du tube afin de former un film multicouche ;
où la composition de couche auto-adhérente comprend :

une résine porteuse ayant une cristallinité comprise dans l'intervalle allant de 10 % à 30 % ; et
de 0,5 à 50,0 % en poids d'un composite séquencé ou d'un composite séquencé spécifié tel que défini dans la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110311792 A
- US 7498282 B
- US 5272236 A, Lai
- US 6486284 B, Karande
- US 6100341 A, Friedman
- US 7608668 B
- WO 20160028961 A1
- US 8053529 B
- US 8686087 B
- US 8716400 B
- US 7951882 B
- WO 2011016991 A2
- US 3318538 A, Needham
- US 6111019 A, Arjunan
- US 4599392 A
- WO 2005023912 A
- WO 2014051682 A
- WO 2011019563 A
- US 5278272 A
- US 5582923 A
- US 5733155 A
- EP 2653392 A
- US 3645992 A
- US 4076698 A
- US 3914342 A
- US 5854045 A
- WO 2005111291 A1
- WO 2006045501 A
- WO 2008104371 A
- US 8372931 B
- US 4352915 A
- US 5925448 A
- US 6445642 B
- EP 2653392 A1
- US 6521338 B, Maka
- US 9334349 B
- WO 2005090426 A
- US 20060199930 A
- US 20070167578 A
- US 20080311812 A
- US 7355089 B
- WO 2009012215 A
- US 20110082257 A
- US 20110082258 A
- US 20110082249 A
- US 8802774 B

**Non-patent literature cited in the description**

- **WILLIAMS ; WARD.** *Journal of Polymer Science, Polymer Letters,* 1968, vol. 6 (621
- **WILLIAMS ; WARD.** *J. Polym. Sc., Polym. Let.,* 1968, vol. 6 (621
- **LEE, D. ; MILLER, M. D. ; MEUNIER, D. M. ; LYONS, J. W. ; BONNER, J. M. ; PELL, R. J. ; SHAN, C. L. P. ; HUANG, T.** *J. Chromatogr. A,* 2011, vol. 1218, 7173
- **BRUN, Y. ; FOSTER, P.** *J. Sep. Sci.,* 2010, vol. 33, 3501